# FASCICULE DE BREVET EUROPEEN

(11) **EP 3 233 270 B1**
(45) Date de publication et mention de la délivrance du brevet: **11.10.2023**
(21) Numéro de dépôt: 15810750.8
(22) Date de dépôt: 18.12.2015
(51) Int. Cl.: B01J 19/24

(54) **MODULE ELEMENTAIRE POUR REACTEUR D'ELECTROLYSE DE L'EAU (EHT) OU DE CO-ELECTROLYSE AVEC H2O/CO2 OU PILE A COMBUSTIBLE SOFC ET POUR REACTEUR CATALYTIQUE DE METHANATION OU DE REFORMAGE**
ELEMENTARES MODUL FÜR EINEN REAKTOR ZUR AUSFÜHRUNG VON WASSERELEKTROLYSE (HTE) ODER H2O/CO2-CO-ELEKTROLYSE ODER EINE SOFC-BRENNSTOFFZELLE UND FÜR EINEN REAKTOR ZUR KATALYTISCHEN METHANISIERUNG ODER REFORMIERUNG
ELEMENTARY MODULE FOR A REACTOR PERFORMING WATER ELECTROLYSIS (HTE) OR H2O/CO2 CO-ELECTROLYSIS OR AN SOFC FUEL CELL AND FOR A CATALYTIC METHANATION OR REFORMING REACTOR

(30) Priorité: 18.12.2014 FR 1462704
(43) Date de publication de la demande: 25.10.2017
(73) Titulaire: Commissariat à l'Énergie Atomique et aux Énergies Alternatives, 75015 Paris (FR)
(72) Inventeur: REYTIER, Magali, 38250 Villard de Lans (FR); ROUX, Guilhem, 38120 Saint-Egrève (FR); SZYNAL, Philippe, 73800 Chignin (FR)
(74) Mandataire: Cabinet Nony
(86) Numéro de dépôt international: PCT/EP2015/080426
(87) Numéro de publication internationale: WO 2016/097261

(56) Documents cités:
- WO-A1-2014/097101
- WO-A1-2014/097191
- WO-A1-2014/167477
- US-B1- 6 537 506

## Description

### Domaine technique

La présente invention concerne la réalisation d'un module élémentaire que l'on peut utiliser aussi bien dans un réacteur d'électrolyse de l'eau (EHT) ou de co-électrolyse avec H₂O/CO₂ ou dans une pile à combustible SOFC, que dans un réacteur catalytique de méthanation ou de reformage.

Les procédés d'obtention préférés mis en oeuvre par les réacteurs selon l'invention comportent une étape d'électrolyse de l'eau à haute température (EHT, ou EVHT pour électrolyse de la vapeur d'eau à haute température, ou HTE acronyme anglais pour « *High Temperature Electrolysis »,* ou encore HTSE acronyme anglais pour *« High Temperature Steam Electrolysis »)* ou une étape dite de co-électrolyse de l'eau et dioxyde de carbone CO₂ à haute température et une étape de fabrication de gaz combustible par réaction catalytique.

L'invention a trait plus particulièrement à une nouvelle conception d'un réacteur d'électrolyse ou de co-électrolyse, ou électrolyseur, à haute température (EHT), à empilement de cellules d'électrolyse élémentaires pour produire soit de l'hydrogène, soit un gaz de synthèse ("*syngas*" en anglais pour un mélange H₂ + CO) à partir de vapeur d'eau H₂O et de dioxyde de carbone CO₂ et d'un réacteur-échangeur catalytique de méthanation, destiné à être couplé en aval de la sortie de l'électrolyseur pour convertir par catalyse hétérogène en gaz combustible souhaité, le gaz de synthèse obtenu préalablement soit directement du réacteur de co-électrolyse, soit par mélange de l'H₂ sortant du réacteur d'électrolyse avec du CO₂.

Un réacteur de méthanation selon l'invention peut fonctionner dans une enceinte sous pression. Il peut être relié en amont à un réacteur d'électrolyse/co-électrolyse lui-même sous pression ou avec un compresseur intercalé entre les deux.

### Art antérieur

Parmi les solutions de stockage massif d'énergie déjà envisagées, le stockage hydraulique est déjà largement répandu. Les capacités restantes de ce type de stockage risquent d'être rapidement saturées. En outre, les systèmes hydrauliques nécessitent des conditions géographiques et géologiques particulières et peuvent de ce fait s'avérer assez onéreuses. Pour les problèmes de stockage à venir, le stockage hydraulique ne pourra donc être qu'une solution partielle.

Une solution alternative de stockage a également été envisagée : il s'agit du stockage par air comprimé (CAES acronyme anglais pour « *Compressed Air Energy Storage* »). Selon cette technologie, il est prévu de stocker de l'air comprimé produit avec l'électricité dans des cavités sous-terraines. Ces dernières exigent elles aussi des caractéristiques géographiques spécifiques, comme les cavités salines. Toutefois, le rendement de cette solution de stockage n'est pas satisfaisant.

L'hydrogène enfin est annoncé comme un vecteur d'énergie susceptible de pouvoir stocker massivement l'électricité dans certaines configurations : on peut citer ici le projet déjà réalisé en corse sous l'acronyme MYRTE (acronyme de Mission hydrogène Renouvelable pour l'Intégration au Réseau Electrique) à l'initiative de la demanderesse.

Cependant, toutes ces solutions de stockage massif d'énergie requièrent des infrastructures importantes à développer (sites propres pour l'hydraulique, cavités sous-terraines, systèmes de stockage hydrogène). C'est pourquoi, plus récemment, le stockage massif d'énergie par conversion de l'électricité renouvelable en énergie chimique via la production de combustible de synthèse a fait une percée significative aussi désignée par l'appellation « Power to gas », représentant une alternative de stockage à fort potentiel.

Par ailleurs, réduire les émissions de dioxyde de carbone CO2 résultant de l'utilisation d'énergies fossiles, valoriser autant que possible le CO2 issu de l'utilisation de ces énergies plutôt que de le stocker pour une durée indéterminée, utiliser à la demande l'électricité issue de sources d'énergie dite décarbonée, notamment lors des périodes de surproduction, transformer cette électricité en un produit stockable permettant éventuellement de produire de l'électricité à la demande lors des périodes de déficits de production sans avoir à faire appel à des énergies fortement carbonées sont autant d'objectifs à atteindre dans un souci d'efficacité globale.

La fabrication d'un gaz combustible de synthèse à partir d'un mélange de vapeur d'eau et de dioxyde de carbone CO2, grâce à de l'électricité dite décarbonée, répond à ces objectifs.

L'électrolyse de la vapeur d'eau H₂O pour produire de l'hydrogène H₂ et/ou la co-électrolyse de H₂O+CO₂ à haute température au sein d'un électrolyseur à oxydes solides est une des possibilités. Les réactions d'électrolyse de la vapeur d'eau (I) et de co-électrolyse de H₂O+CO₂ (II) se font selon les équations suivantes :

Electrolyse de l'eau: H₂O →H₂ + ½ O₂ (I)

Co-électrolyse: CO₂ + H₂O → CO + H₂ + O₂ (II).

Ainsi, l'électrolyse de la vapeur d'eau H₂O permet une fabrication dite directe du gaz combustible par catalyse hétérogène par injection d'un mélange d'hydrogène H₂ produit selon l'électrolyse (I) et de dioxyde de carbone CO₂ dans un catalyseur au sein d'un réacteur dit de méthanation.

La co-électrolyse de H₂O+CO₂ (II) permet une fabrication dite indirecte du gaz combustible à partir du gaz de synthèse (H₂ + CO) qui ouvre la voie à la production d'hydrocarbures et notamment de méthane, principal composant du gaz naturel.

Pour ce faire, on utilise aussi un réacteur catalytique de méthanation couplé à l'aval du réacteur de co-électrolyse.

La production du gaz naturel de synthèse donne la possibilité d'utiliser immédiatement toutes les infrastructures existantes développées pour cette énergie : réseaux de transport et de distribution, capacités de stockage, systèmes de production d'électricité, etc... En outre, il ressort également que le bilan carbone de cette production pourrait être nul, voire négatif, dès lors que l'électricité utilisée serait d'origine décarbonée et que le CO2 serait issu de systèmes utilisant des énergies fossiles que l'on aurait préalablement capté.

De manière réversible, ce gaz naturel peut être utilisé pour alimenter une pile à combustible de type SOFC pour produire de l'électricité et assurer la fonction de déstockage lorsque l'électricité est chère et/ou trop chère pour permettre son stockage sous forme de gaz. Le gaz naturel est alors au préalable reformé au sein d'un réacteur catalytique dit de reformage couplé en amont de la pile.

Pour réaliser l'électrolyse de l'eau (I), il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur. Pour mettre en oeuvre l'électrolyse à haute température, il est connu d'utiliser un électrolyseur de type SOEC (acronyme anglais de « *Solid Oxyde Electrolyser Cell* »), constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau H2O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H2 et des ions oxygène. Le dihydrogène est collecté et évacué en sortie de compartiment à hydrogène. Les ions oxygène O²⁻ migrent à travers l'électrolyte et se recombinent en dioxygène à l'interface entre l'électrolyte et l'électrode à oxygène (anode).

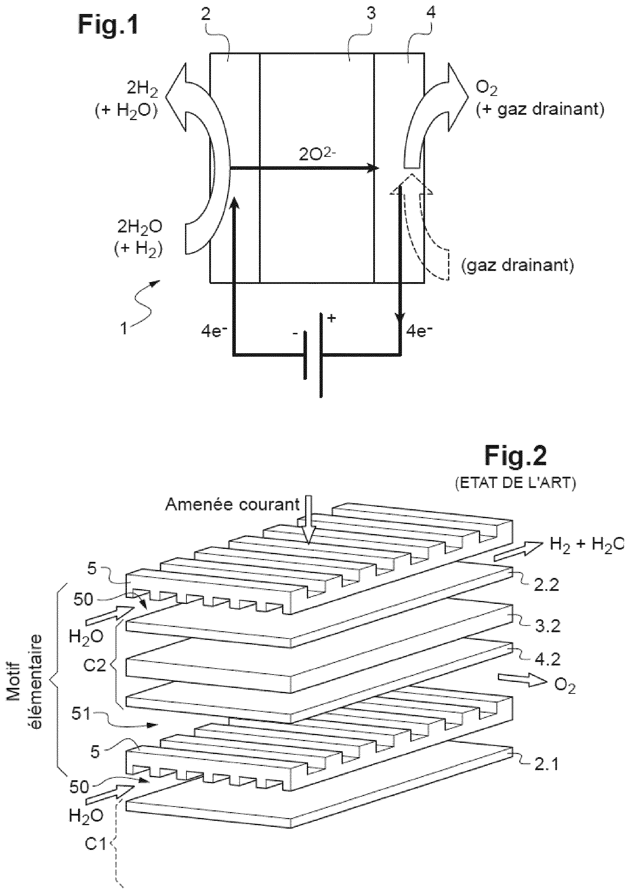

On a schématisée en figure 1, une cellule d'électrolyse élémentaire 1 qui est formée d'une cathode 2 et d'une anode 4, placées de part et d'autre d'un électrolyte solide 3. Les deux électrodes (cathode et anode) 2,4 sont des conducteurs, en matériau poreux, et l'électrolyte 3 est étanche au gaz, isolant électronique et conducteur ionique. L'électrolyte peut être en particulier un conducteur anionique, plus précisément un conducteur anionique des ions O²⁻ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

2 H₂O + 4 e → 2 H₂ + 2 O²⁻.

A l'anode 4, la demi-réaction est la suivante:

2 O²⁻ → O₂+ 4 e⁻.

L'électrolyte 3 intercalé entre les deux électrodes 2, 4 est le lieu de migration des ions O^{2-,} sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

De la même manière, une pile SOFC offre un fonctionnement inverse du même réacteur de conversion électrochimique : elle produit un courant électrique et de la chaleur en étant alimentée en hydrogène (ou gaz naturel) et en air. Ces systèmes peuvent fonctionner aujourd'hui entre 600°C et 1000°C.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires C1, C2... de type à oxydes solides (SOEC) empilées alternativement avec des interconnecteurs 5. Chaque cellule C1, C2... est constituée d'une cathode 2.1, 2.2,... et d'une anode 4.1, 4.2, entre lesquelles est disposé un électrolyte 3.1, 3.2.... L'ensemble des cellules d'électrolyse est alimenté en série par le courant électrique et en parallèle par les gaz.

L'interconnecteur 5 est généralement un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 50 en aval de la cellule C1, C2... après dissociation de la vapeur d'eau par celle-ci. Le collectage de l'oxygène produit à l'anode 4.2 est effectué dans le compartiment anodique 51 en aval de la cellule C1, C2... après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Dans une pile à combustible à oxydes solides SOFC selon l'état de l'art, les cellules C1, C2... et interconnecteurs 5 utilisés sont les mêmes composants que ceux d'un electrolyseur EHT, mais le fonctionnement est inverse tel qui vient d'être expliqué avec un sens du courant inversé, avec de l'air qui alimente les compartiments cathodiques et de l'hydrogène en tant que combustible qui alimente les compartiments anodiques.

Un fonctionnement satisfaisant d'un électrolyseur ou co-électrolyseur EHT nécessite entre autres les fonctions essentielles suivantes:
A/ une bonne isolation électrique entre deux interconnecteurs adjacents dans l'empilement, sous peine de court-circuiter la cellule d'électrolyse élémentaire intercalée entre les deux interconnecteurs;
B/ une bonne étanchéité entre les deux compartiments distincts, i.e. anodique et cathodique, sous peine de recombinaison des gaz produits entraînant une baisse de
C/ une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules; cela correspond à rechercher la plus faible résistance de polarisation;
D/ un bon contact électrique et une surface de contact suffisante entre chaque cellule et interconnecteur, afin d'obtenir la plus faible résistance ohmique entre cellules et interconnecteurs.

L'électrolyseur EHT qui vient d'être décrit peut aussi permettre d'électrolyser un mélange H₂O+CO₂ pour former un gaz de synthèse H₂+CO (et de l'oxygène) dans des proportions dépendantes du combustible visé.

Or, chaque gaz de synthèse destiné à produire un gaz combustible nécessite un ratio H₂/CO donné en fonction du combustible visé. De même, la fabrication directe du gaz combustible nécessite un ratio CO₂/H2 donné en fonction du combustible visé.

Le tableau 1 ci-dessous illustre ainsi les ratios nécessaires en fonction de procédés de synthèse de différents combustibles :

**TABLEAU 1**

| PROCEDE DE SYNTHESE | PRODUIT COMBUSTIBLE OBTENU | RATIO H2/CO NECESSAIRE | RATIO CO2/H2 NECESSAIRE |
|---|---|---|---|
| synthèse du méthane | Gaz naturel | 1/3 | 1/4 |
| synthèse du méthane 1 | méthanol | 1/2 | 1/3 |
| synthèse du diméthyléther (DME) | DME | 1/1 | 1/2 |
| synthèse Ficher Tropsch | Diesel | 1/2 | 1/3 |

La demanderesse a proposé dans la demande de brevet WO 2014/097101 un nouveau procédé et réacteur de co-électrolyse permettant d'obtenir en sortie un ratio H2/CO H2/CO variable et donc un gaz de synthèse dont la composition est adaptée pour produire le gaz combustible souhaité.

En outre, le transport, le stockage et l'utilisation de l'hydrogène nécessitent sa mise en pression. Il est déjà connu qu'au lieu de comprimer l'hydrogène produit, ce qui présente un coût important, de réaliser l'électrolyse de l'eau directement à partir de vapeur d'eau sous pression, l'eau étant alors comprimée à l'état liquide au préalable, ce qui est beaucoup moins coûteux.

Pour ne pas introduire de trop gros différentiels de pression entre l'intérieur et l'extérieur de l'électrolyseur, il est classiquement envisagé de fonctionner en autoclave, c'est-à-dire dans une enceinte résistant à la pression comme décrit dans la demande de brevet WO 2011/110674A1, de manière à équilibrer les pressions de l'électrolyseur grâce à un gaz sous pression à l'intérieur de l'autoclave.

L'hydrogénation de CO2 en méthane est un procédé industriel qui a été étudié à chaque choc énergétique, soit pour produire du méthane de synthèse à partir de CO₂ et H₂ purs, soit dans des centrales à gazéification du charbon avec des gaz et des conditions plus compliqués (procédé Fischer-Tropsch).

Pour le procédé de méthanation, deux voies sont possibles et ont été plus ou moins étudiées selon l'état de l'art.

La première voie est celle directe, avec une unique réaction selon l'équation suivante :

*CO*₂ + 4*H*₂ → *CH*₄ + 2*H*₂*O.*

La deuxième voie est celle indirecte, avec une réaction en deux étapes selon les équations suivantes :

*CO*₂ + *H₂* → *CO* + *H*₂*O.*

*CO* + 3*H*₂ → *CH*₄ + *H*₂*O* .

Ainsi, il est possible de produire directement du méthane en sortie de co-électrolyseur par réaction catalytique hétérogène de méthanation. D'autres procédés existent pour produire du méthane CH₄ à partir de CO₂ dont la photo-catalyse, les procédés électro-catalytiques, à plasma-catalyse, ou les procédés de catalyse homogène.

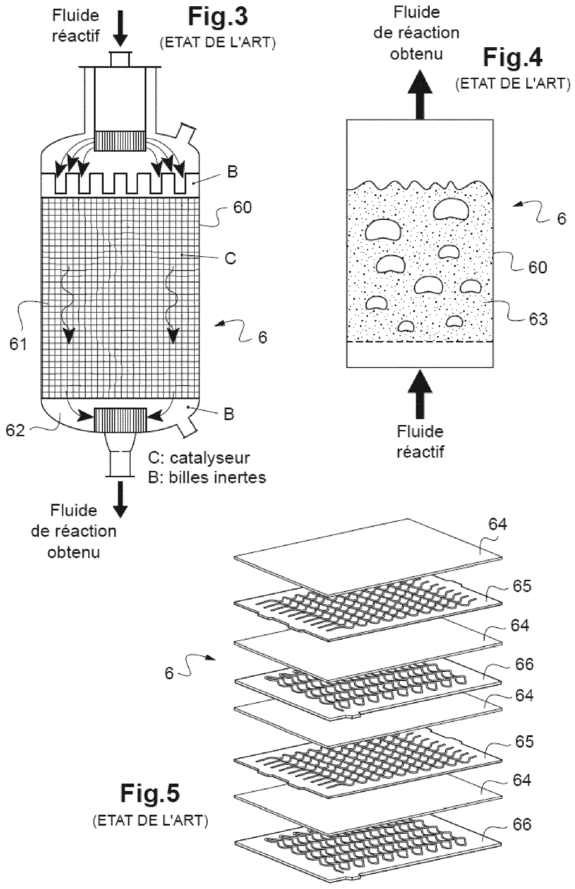

Comme mis en évidence par les auteurs de la publication [1] (voir notamment les figures 3 et 4), les réactions de méthanation sont favorisées à haute pression et à basse température selon la loi de Le Chatelier. En effet, les calculs thermodynamiques indiqués dans [1] indiquent une conversion théorique de 100% du CO2 en CH₄ à moins de 150°C contre 83% à 400°C. Cependant, il est également indiqué qu'une température minimum ainsi qu'une vitesse des gaz optimum est à ajuster pour garantir une cinétique suffisante. La température optimale à laquelle la méthanation doit être réalisée, est donc un compromis entre le taux de conversion souhaité du CO₂ et la cinétique recherchée de la réaction.

Les catalyseurs utilisés pour la méthanation sont en général à base de Nickel supporté par un oxyde de zirconium (ZrO2), ou à base de nickel (Ni) supporté par un oxyde d'aluminium (Al₂O₃). La publication [1] a mis en exergue l'activité catalytique importante pour un catalyseur à base de nickel (Ni) supporté par des oxydes mixtes de Cérium (Ce) et de zirconium de formule Ce0.72Zr0.28O2. De même, la publication [2] a montré, pour une méthanation sous pression de 30 bars, l'excellente activité catalytique d'un catalyseur bimétallique à base de nickel (Ni) et de fer (Fe) supporté par un oxyde d'aluminium (Al₂O₃) de formule Ni-Fe/γ- Al₂O₃.

Plusieurs types de réacteurs ont déjà été envisagés pour mettre en oeuvre la méthanation.

On peut citer tout d'abord les réacteurs à lit fixe dans lesquels le catalyseur solide est intégré sous forme de grains ou pastilles. Un réacteur à lit fixe est un type de réacteur à écoulement piston, bien adapté aux réactions catalytiques hétérogènes en phase gazeuse. On a représenté schématiquement en figure 3, un réacteur à lit fixe 6 dont l'enceinte étanche 60 loge en partie supérieure des catalyseurs 61 sous forme de pastilles et en partie inférieure des billes inertes 62, l'écoulement du fluide se faisant du haut vers le bas. L'inconvénient de ce type de réacteurs est la gestion thermique difficile à réaliser pour des réactions exothermiques, comme la méthanation.

On peut citer également les réacteurs de type à lit fluidisé ou entrainé dans lesquels le catalyseur à fluidifier est sous forme de poudre. On a représenté schématiquement en figure 4, un réacteur à lit fluidisé 6 dans l'enceinte 60 duquel le catalyseur 63 est fluidifié, l'écoulement du fluide se faisant du bas vers le haut. Ces réacteurs à lit fluidisé sont bien adaptés pour des réactions avec des volumes de réactifs très importants. De plus, la fluidisation du catalyseur permet une très bonne homogénéisation thermique du mélange de réactifs dans le réacteur et donc un meilleur contrôle thermique.

Enfin, il existe des réacteurs avec des canaux structurés tels que les réacteurs multitubulaires, les réacteurs-échangeurs monolithiques et les réacteurs-échangeurs à plaques, dans lesquels le catalyseur solide est généralement déposé sous forme de revêtement dans les canaux réactifs. Les réacteurs monolithiques ou à plaques sont usuellement appelés échangeurs-réacteurs ou réacteurs-échangeurs car, en plus du circuit de fluide à l'entrée duquel est injectée simultanément une quantité faible de co-réactants, ils intègrent un deuxième circuit de fluide, dont la fonction est de contrôler thermiquement la réaction chimique, soit en apportant la chaleur nécessaire à la réaction, soit au contraire en évacuant la chaleur dégagée par celle-ci. Ainsi, ces réacteurs-échangeurs, et plus particulièrement ceux à plaques sont bien adaptés pour une réaction exothermique de méthanation qui nécessite une bon contrôle de la thermique. On a représenté en figure 5, un réacteur 6 à plaques empilées 64, 65, 66 dont le circuit de fluide des produits réactifs (co-réactants) est réalisé au sein de motifs dans une plaque 65 fermée de part de d'autre par des plaques pleines 64. Un circuit de fluide de refroidissement ou de réchauffement de la réaction est réalisé adjacent au circuit de réactifs, au sein de motifs dans une plaque 66 fermée également de part de d'autre par des plaques pleines 64 dont une est commune avec celle de fermeture du circuit de réactifs, les échanges thermiques ayant lieu au travers de cette plaque 64 commune.

La méthanation reste un procédé coûteux en termes d'investissement, car quel que soit le type de réacteurs connus utilisés à ce jour, il est nécessaire de réaliser d'une part un type électrolyseur ou co-électrolyseur spécifique pour la réaction électrolyse ou de co-électrolyse à haute température, et d'autre part un réacteur ou réacteur-échangeur spécifique à la méthanation, ce qui implique un cumul des coût de réalisation. En outre, chacun des réacteurs connus d'électrolyse/co-électrolyse et de méthanation présente une structure propre avec une géométrie bien distincte, ce qui nécessairement conduit à une intégration imparfaite en encombrement. Enfin, le couplage thermique effectif entre méthanation et électrolyse/co-électrolyse haute température, est loin d'avoir été réalisé à ce jour avec les réacteurs connus.

Il existe donc un besoin pour améliorer les installations fonctionnant à haute température, dites « Power to gas », notamment en vue de baisser leur coût d'investissement et de faciliter l' intégration entre des réacteurs d'électrolyse/co-électrolyse et réacteurs de méthanation, afin de réduire l'encombrement global et de permettre un meilleur couplage thermique entre réaction d'électrolyse/co-électrolyse et réaction de méthanation.

Le but de l'invention est de répondre au moins en partie à ce besoin.

### Exposé de l'invention

Pour ce faire, l'invention concerne, sous une alternative, un module élémentaire de distribution de gaz réactifs et produits de réaction pour réacteur soit d'électrolyse à haute température de la vapeur d'eau, soit de co-électrolyse à haute température de vapeur d'eau et de dioxyde de carbone, pour pile à combustible SOFC, ou pour réacteur-échangeur catalytique à empilement, constitué de trois tôles planes, allongées selon deux axes de symétrie orthogonaux entre eux dont :
- une des tôles d'extrémité dite première tôle d'extrémité, et la tôle centrale comportent chacune une partie centrale non percée et sont percées chacune, à la périphérie de sa partie centrale, d'au moins quatre lumières, les première et deuxième lumières de chaque tôle étant allongées sur une longueur correspondant à une partie de la longueur de la partie centrale selon l'un des axes, tandis que les troisième et quatrième lumières de chaque tôle sont allongées sur une longueur correspondant sensiblement à la longueur de la partie centrale selon l'autre des axes,
- la première tôle d'extrémité, comporte en outre une cinquième et sixième lumières agencées symétriquement de part et d'autre de l'axe, à l'intérieur de ses premières à quatrième lumières, et sont allongées sur une longueur correspondant sensiblement à la longueur de la partie centrale selon l'axe,
- l'autre des tôles d'extrémité, dite deuxième tôle d'extrémité, comporte à la périphérie de sa partie centrale, d'au moins quatre lumières, les première et deuxième lumières étant allongées sur une longueur correspondant à une partie de la longueur de la partie centrale selon l'un des axes, tandis que les troisième et quatrième lumières sont allongées sur une longueur correspondant sensiblement à la longueur de la partie centrale selon l'autre des axes, la partie centrale de la deuxième tôle d'extrémité étant en outre percée d'une cinquième lumière,
- l'autre des tôles d'extrémité, comporte en outre une sixième et septième lumières agencées symétriquement de part et d'autre de l'axe, à l'intérieur de ses premières à quatrième lumières, et sont allongées sur une longueur correspondant sensiblement à la longueur de la partie centrale selon l'autre des axes,
dans lequel :
- les première à quatrième lumières de la tôle centrale sont élargies par rapport respectivement aux première à quatrième lumières de chaque tôle d'extrémité,
- toutes les lumières élargies de la tôle centrale comportent dans leur partie élargie, des languettes de tôles espacées les unes des autres en formant un peigne définissant des fentes.

Selon l'invention, les trois tôles sont stratifiées et assemblées entre elles telles que:
- les languettes de tôles forment des entretoises d'espacement entre première et deuxième tôles d'extrémité,
- chacune des première à quatrième lumières de l'une des trois tôles est en communication fluidique individuellement respectivement avec l'une des première à quatrième lumières correspondantes des deux autres tôles,
- la première lumière de la première tôle d'extrémité est en communication fluidique avec la cinquième de la première tôle d'extrémité par le biais des fentes de la première lumière élargie de la tôle centrale,
- la deuxième lumière de la première tôle d'extrémité est en communication fluidique avec la sixième lumière de la première tôle d'extrémité par le biais des fentes de la deuxième lumière élargie de la tôle centrale,
- la troisième lumière de la deuxième tôle d'extrémité est en communication fluidique avec la cinquième lumière de la deuxième tôle d'extrémité par le biais des fentes de la troisième lumière élargie de la tôle centrale et par le biais de la sixième lumière de la deuxième tôle d'extrémité,
- la quatrième lumière de la deuxième tôle d'extrémité est en communication fluidique avec la cinquième lumière de la deuxième tôle d'extrémité par le biais des fentes de la quatrième lumière élargie de la tôle centrale et par le biais de la septième lumière de la deuxième tôle d'extrémité.

Par « lumière » on entend ici et dans le cadre de l'invention, un trou débouchant de part et d'autre d'une tôle métallique.

De préférence, les trois tôles sont assemblées entre elles par soudure ou par brasure.

De préférence encore, les trois tôles sont assemblées entre elles par des lignes de soudure fermées individuellement autour de chaque communication fluidique.

Les trois tôles peuvent être en acier ferritique à environ 20% de chrome, de préférence en CROFER^{®} 22APU ou le FT18TNb, à base Nickel de type Inconel^{®} 600 ou Haynes^{®}.

Selon une caractéristique avantageuse, chacune des trois tôles a une épaisseur comprise entre 0,1 et 1mm. La gestion thermique du réacteur-échangeur catalytique est facilitée par la faible épaisseur des tôles utilisées pour constituer un module élémentaire.

L'invention a également pour objet, un réacteur-échangeur catalytique comportant un empilement des éléments suivants:
- au moins trois modules élémentaires selon l'une des revendications précédentes,
- au moins un cadre d'étanchéité allongé selon deux axes de symétrie orthogonaux entre eux, chaque cadre étant percé à sa périphérie de leur partie centrale, d'au moins quatre lumières, les première et deuxième lumières de chaque cadre étant allongées sur une longueur correspondant à une partie de la longueur de la partie centrale selon l'un des axes, tandis que les troisième et quatrième lumières de chaque cadre sont allongées sur une longueur correspondant sensiblement à la longueur de la partie centrale selon l'autre des axes, chaque cadre comportant une partie centrale percée d'une cinquième lumière,
- une plaque-support, supportant un matériau catalytique solide,
l'empilement étant tel que :
- le module central est agencé tête-bêche par rapport aux deux modules d'extrémité de sorte que la première tôle d'extrémité du module central est en regard de la première tôle d'extrémité d'un des modules d'extrémité et que la deuxième tôle d'extrémité du module central est en regard de la deuxième tôle d'extrémité de l'autre des modules d'extrémité,
- un cadre d'étanchéité est intercalé entre le module central et un des modules d'extrémité et en contact avec une de leurs deux tôles d'extrémité,
- la plaque support est agencée à l'intérieur du cadre d'étanchéité et en appui contre les parties centrales non percées de la première tôle d'extrémité du module central et de l'autre des modules d'extrémité, et définit une chambre de réaction catalytique,
- l'espace délimité entre les deux parties centrales percées du module central et de l'autre des modules d'extrémité définit une chambre de circulation d'un fluide caloporteur.

En s'intéressant à la question des coûts d'investissement d'un ensemble complet constitué d'un réacteur d'électrolyse EHT/co-électrolyse EHT (réacteur SOEC) et d'un réacteur de méthanation relié en aval, les inventeurs ont analysé qu'une part prépondérante de ces coûts était liée à la réalisation même de ces réacteurs, nécessairement différenciée.

Ils ont alors pensé simplement à réaliser le plus de composants communs entre ces deux réacteurs.

Partant du constat que le réacteur le plus éprouvant en termes de contraintes thermiques, fluidiques et mécaniques était le réacteur SOEC, les inventeurs ont alors proposé à définir des interconnecteurs EHT et cadres d'étanchéité qui pouvaient être ainsi mis en oeuvre dans un réacteur-échangeur catalytique de méthanation.

Ainsi, l'invention bien que simple est surprenante car personne n'avait pensé à réaliser des réacteurs-échangeurs catalytiques avec des composants qui pouvaient convenir pour l'électrolyse/co-électrolyse de la vapeur d'eau à haute température ou dans une pile à combustible SOFC.

Les réacteurs-échangeurs catalytiques qui peuvent être réalisés dans le cadre de l'invention sont soit des réacteurs de méthanation à refroidir et qui sont alimentés en H2 ou en mélange H2+CO à partir d'un électrolyseur SOEC, soit des réacteurs de reformage à maintenir chaud qui sont destinés à alimenter une pile à combustible SOFC, soit plus généralement tous types de réacteurs catalytiques nécessitant une gestion thermique de la réaction (refroidissement ou réchauffage)

Grâce à l'invention, on réduit les coûts d'investissement ou réacteurs-échangeurs de méthanation ou de reformage, on facilite leur intégration avec des réacteurs d'électrolyse/co-électrolyse en réduisant l'encombrement global et en permettant un bon couplage thermique entre réaction d'électrolyse/co-électrolyse et réaction de méthanation, car les réacteurs ont la même forme géométrique et peuvent ainsi être rapprochés, voire superposés.

En outre, le circuit intégré de caloporteur à des fins de gestion thermique dans le réacteur-échangeur selon l'invention peut permettre de préchauffer ou refroidir les gaz utilisés par le procédé lui-même en amont ou en aval du réacteur-échangeur.

Les avantages à réaliser un réacteur-échangeur catalytique à partir de composants communs (modules élémentaires, cadre d'étanchéité) avec un réacteur d'électrolyse/de co-électrolyse EHT ou une pile à combustible SOFC réalisé par empilement, conformément à l'invention sont nombreux. Parmi ceux-ci, on peut citer:
- possibilité de recycler les modules élémentaires constituant les interconnecteurs électriques et fluidiques des réacteurs SOEC/SOFC, en tant que composants délimitant les circuits de fluide de réactifs et de caloporteur d'un réacteur-échangeur catalytique,
- possibilité de fabriquer les composants communs (modules élémentaires, cadre d'étanchéité) avec le même outil de production de manière à faire baisser les coûts de production à grande échelle,
- facilité d'intégration des deux réacteurs (convertisseur électrochimique SOEC/SOFC et réacteur-échangeur catalytique) permettant de réduire l'encombrement de par leur géométrie identique, et d'améliorer leur couplage thermique,
- possibilité de fonctionnement en pression en autoclave pressurisé (enceinte sous pression),
- conception d'étanchéité commune pour les circuits de gaz réactifs/caloporteur des réacteurs SOEC/SOFC et des réacteurs-échangeurs catalytique au moyen de cadres identiques à base de mica avec éventuellement un cordon de verre et/ou vitrocéramique. L'étanchéité d'un réacteur-échangeur catalytique peut aussi être réalisée simplement avec des cadres en mica, ce qui facilitera grandement le changement du catalyseur en offrant une démontabilité complète du réacteur-échangeur. Le circuit de fluide caloporteur et celui de l'enceinte pressurisée doivent alors être soit un des gaz réactifs, soit un produit de la réaction envisagée.

Selon une première variante de réalisation, le réacteur-échangeur comporte au moins deux cadres d'étanchéité, l'empilement étant tel que :
- l'autre cadre d'étanchéité est intercalé entre le module central et l'autre des modules d'extrémité et en contact avec une de leurs deux tôles d'extrémité,
- la chambre de circulation du fluide caloporteur est délimitée par l'autre cadre d'étanchéité.

Selon une deuxième variante de réalisation, le module central et l'autre des modules d'extrémité sont soudés entre eux, la chambre de circulation du fluide caloporteur étant alors délimitée par les épaisseurs des deuxièmes tôles d'extrémité percées et jointives du module central et de l'autre des modules d'extrémité.

Selon une caractéristique avantageuse, le matériau catalytique solide est à base de nickel (Ni) supporté par un oxyde de zirconium (ZrO2), ou à base de nickel (Ni) supporté par un oxyde d'aluminium (Al₂O₃), ou bimétallique à base de nickel (Ni) et de fer (Fe) supporté par un oxyde d'aluminium (Al₂O₃), de préférence Ni-Fe/y- Al₂O₃, ou à base de nickel (Ni) supporté par des oxydes mixtes de Cérium (Ce) et de zirconium, de préférence Ce_{0.72}Zr_{0.28}O₂.

Avantageusement, les cadres d'étanchéité sont à base de mica.

De préférence, les cadres à base de mica comportent en outre des cordons d'étanchéité en verre et/ou vitrocéramique, les cordons étant continus et fermés individuellement autour de chaque lumière.

Selon une application préférée, le réacteur-échangeur selon l'invention constitue un réacteur-échangeur de méthanation ou un réacteur-échangeur de reformage.

L'invention a également pour objet un procédé de fonctionnement d'un réacteur-échangeur de méthanation comme décrit-ci-dessus, selon lequel on alimente et on distribue un mélange d'hydrogène et de monoxyde ou dioxyde de carbone en l'injectant dans les premières lumières, on récupère le méthane produit dans les deuxième lumières, et simultanément on alimente un fluide caloporteur de refroidissement dans les troisième lumières et on le récupère dans les quatrième lumières.

L'invention a également pour objet un procédé de fonctionnement d'un réacteur-échangeur de reformage comme décrit-ci-dessus, selon lequel on alimente et on distribue un mélange de méthane et de vapeur d'eau en l'injectant dans les premières lumières, on récupère le gaz de synthèse produit contenant du monoxyde de carbone (CO) et de l'hydrogène (H₂) dans les deuxième lumières, et simultanément on alimente un fluide caloporteur de réchauffage dans les troisième lumières et on le récupère dans les quatrième lumières.

L'invention concerne encore un réacteur d'électrolyse à haute température de la vapeur d'eau, ou de co-électrolyse à haute température de vapeur d'eau et de dioxyde de carbone, comportant un empilement de cellules d'électrolyse élémentaires de type SOEC formées chacune d'une cathode, d'une anode et d'un électrolyte intercalé entre la cathode et l'anode, d'une pluralité d'interconnecteurs électrique et fluidique constitués chacun d'un module élémentaire comme décrit-ci-dessus, agencés chacun entre deux cellules élémentaires adjacentes avec la première tôle d'extrémité en contact électrique avec la cathode de l'une des deux cellules élémentaires et la tôle centrale en contact électrique avec l'anode de l'autre des deux cellules élémentaires, et de cadres d'étanchéité agencés chacun entre deux modules élémentaires et en étant en contact avec une de leurs deux tôles d'extrémité.

L'invention concerne encore un ensemble de réacteurs comprenant :
- au moins un réacteur soit d'électrolyse à haute température de la vapeur d'eau, soit de co-électrolyse à haute température de vapeur d'eau et de dioxyde de carbone, comme défini ci-dessus, ,
- au moins un réacteur-échangeur catalytique de méthanation, comme décrit-ci-dessus, relié en aval au réacteur d'électrolyse ou de co-électrolyse.

Selon un mode de réalisation avantageux, l'ensemble comprend au moins une enceinte étanche apte à être mise sous pression donnée, typiquement comprise entre comprises entre 1 et 100 bars, et dans laquelle est logée au moins le réacteur-échangeur de méthanation et/ou le réacteur d'électrolyse/co-électrolyse.

L'invention concerne encore une pile à combustible SOFC, comportant un empilement de cellules électrochimiques élémentaires de type SOFC formées chacune d'une anode, d'une cathode et d'un électrolyte intercalé entre la cathode et l'anode, d'une pluralité d'interconnecteurs électrique et fluidique constitués chacun d'un module élémentaire comme décrit-ci-dessus, agencés chacun entre deux cellules élémentaires adjacentes avec la première tôle d'extrémité en contact électrique avec l'anode de l'une des deux cellules élémentaires et la tôle centrale en contact électrique avec la cathode de l'autre des deux cellules élémentaires, et de cadres d'étanchéité agencés chacun entre deux modules élémentaires.

L'invention concerne encore un ensemble de réacteurs comprenant :
- au moins une pile à combustible SOFC, telle que définie ci-dessus,
- au moins un réacteur-échangeur catalytique de reformage, comme décrit-ci-dessus, relié en amont de la pile à combustible SOFC.

Selon un mode de réalisation avantageux, l'ensemble comprend au moins une enceinte étanche apte à être mise sous pression donnée, typiquement comprise entre comprises entre 1 et 100 bars, et dans laquelle est logée soit uniquement la pile à combustible SOFC, soit à la fois le réacteur-échangeur de reformage et la pile à combustible SOFC. Lorsque seule la pile à combustible SOFC est sous pression alors, entre le réacteur-échangeur de reformage et la pile, on comprime le gaz.

L'invention concerne également un procédé de réalisation d'un réacteur-échangeur catalytique de méthanation selon lequel on réalise les étapes suivantes :
- après fonctionnement selon un nombre de cycles donné, démontage d'un réacteur soit d'électrolyse à haute température de la vapeur d'eau, soit de co-électrolyse à haute température de vapeur d'eau et de dioxyde de carbone, comportant un empilement de cellules d'électrolyse élémentaires de type SOEC formées chacune d'une cathode, d'une anode et d'un électrolyte intercalé entre la cathode et l'anode, et une pluralité d'interconnecteurs électrique et fluidique constitués chacun d'un module élémentaire comme décrit-ci-dessus, agencés chacun entre deux cellules élémentaires adjacentes avec la première tôle d'extrémité en contact électrique avec l'anode de l'une des deux cellules élémentaires et la tôle centrale en contact électrique avec la cathode de l'autre des deux cellules élémentaires, de cadres d'étanchéité agencés chacun entre deux modules élémentaires et en étant en contact avec une de leurs deux tôles d'extrémité,
- enlèvement des cellules d'électrolyse,
- réalisation d'un nouvel empilement avec :
   - intercalage d'un cadre d'étanchéité entre un module élémentaire central et un des modules adjacents et retournement tête-bêche d'un module élémentaire sur deux de sorte à avoir la première tôle d'extrémité d'un module élémentaire en regard de la première tôle d'extrémité d'un module élémentaire adjacent,
   - mise en place d'une plaque-support supportant un matériau catalytique solide mais poreux de méthanation avec appui contre les parties centrales non percées des tôles centrales du module élémentaire central et du module adjacent séparés par le cadre d'étanchéité, afin de définir une chambre de méthanation,
   - réalisation d'un espace délimité entre les deux parties centrales percées du module élémentaire central et de l'autre des modules adjacents, afin de définir une chambre de circulation d'un fluide caloporteur.

L'invention concerne enfin un procédé de réalisation d'un réacteur-échangeur catalytique de reformage selon lequel on réalise les étapes suivantes :
- après fonctionnement selon un nombre de cycles donné, démontage d'un pile à combustible SOFC, comportant un empilement de cellules électrochimiques élémentaires de type SOFC formées chacune d'une anode, d'une cathode et d'un électrolyte intercalé entre la cathode et l'anode, d'une pluralité d'interconnecteurs électrique et fluidique constitués chacun d'un module élémentaire comme décrit-ci-dessus, agencés chacun entre deux cellules élémentaires adjacentes avec la première tôle d'extrémité en contact électrique avec l'anode de l'une des deux cellules élémentaires et la tôle centrale en contact électrique avec la cathode de l'autre des deux cellules élémentaires, et de cadres d'étanchéité agencés chacun entre deux modules élémentaires,
- enlèvement des cellules électrochimiques,
- réalisation d'un nouvel empilement avec :
   - intercalage d'un cadre d'étanchéité entre un module élémentaire central et un des modules adjacents et retournement tête-bêche d'un module élémentaire sur deux de sorte à avoir la première tôle d'extrémité d'un module élémentaire en regard de la première tôle d'extrémité d'un module élémentaire adjacent,
   - mise en place d'une plaque-support supportant un matériau catalytique solide mais poreux de reformage avec appui contre les parties centrales non percées des tôles centrales du module élémentaire central et du module adjacent séparés par le cadre d'étanchéité, afin de définir une chambre de reformage,
   - réalisation d'un espace délimité entre les deux parties centrales percées du module élémentaire central de l'autre des modules adjacents, afin de définir une chambre de circulation d'un fluide caloporteur.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique montrant le principe de fonctionnement d'un électrolyseur d'eau à haute température;
- la figure 2 est une vue schématique en éclaté d'une partie d'un électrolyseur de vapeur d'eau à haute température (EHT) de type SOEC comprenant des interconnecteurs selon l'état de l'art,
- la figure 3 est une vue schématique en coupe d'un réacteur à lit fixe selon l'état de l'art,
- la figure 4 est une vue schématique en coupe d'un réacteur à lit fluidifié selon l'état de l'art,
- la figure 5 est une vue schématique en éclaté d'un réacteur-échangeur à plaques selon l'état de l'art,
- les figures 6A et 6B sont des vues en éclaté, respectivement de dessous et de dessus d'un électrolyseur EHT ou d'une pile à combustible de type SOFC selon l'invention montrant la configuration des étanchéités, des contacts électriques et de la distribution des gaz au sein de l'empilement,
- la figure 7 est une vue en éclaté de dessus d'un interconnecteur électrique et fluidique mis en oeuvre dans un électrolyseur EHT ou une pile à combustible de type SOFC selon les figures 6A et 6B,
- les figures 8A et 8B sont des vues en éclaté, respectivement de dessous et de dessus d'un réacteur-échangeur catalytique de méthanation selon l'invention utilisant en tant que modules élémentaires comme montrés en figure 7, ces figures 8A et 8B montrant la configuration des étanchéités, et de la distribution des gaz au sein de l'empilement,
- la figure 9 est une vue en éclaté de dessus d'un réacteur-échangeur catalytique de méthanation selon les figures 8A et 8B et selon une variante d'étanchéité,
- les figures 10 et 11 sont des vues en coupe et en perspective d'un réacteur-échangeur catalytique selon l'invention montrant respectivement l'entrée de la chambre de gestion thermique (fluide caloporteur) et l'entrée de la chambre de réaction catalytique (gaz réactifs).

Les figures 1 à 5 relatives à l'état de l'art ont déjà été commentées en préambule. Elles ne sont donc pas détaillées ci-après.

Par souci de clarté, les mêmes éléments d'un réacteur d'électrolyse EHT selon l'état de l'art et d'un réacteur-échangeur catalytique selon l'invention sont désignés par les mêmes références numériques.

On précise ici dans l'ensemble de la présente demande, les termes « inférieur », « supérieur », « dessus », « dessous », « intérieur », « extérieur », « « interne » « externe» sont à comprendre par référence à un interconnecteur ou à un module élémentaire de réacteur-catalytique selon l'invention en vue de coupe transversale selon l'axe de symétrie X.

On précise également que les réacteurs d'électrolyseurs ou de piles à combustible décrits sont de type à oxydes solides (SOEC, acronyme anglais de « *Solid Oxyde Electrolyser Cell* »ou SOFC, acronyme anglais de « *Solid Oxide Fuel Cell* ») fonctionnant à haute température. Ainsi, tous les constituants (anode/électrolyte/cathode) d'une cellule d'électrolyse ou de pile sont des céramiques. La haute température de fonctionnement d'un électrolyseur (réacteur d'électrolyse) ou d'une pile est typiquement comprise entre 600°C et 1000°C. Typiquement, les caractéristiques d'une cellule d'électrolyse élémentaire SOEC convenant à l'invention, du type cathode support (CSC), peuvent être celles indiquées comme suit dans le tableau 2 ci-dessous.

**TABLEAU 2**

| **Cellule d'électrolyse** | **Unité** | **Valeur** |
|---|---|---|
| **Cathode 2** | | |
| Matériau constitutif | | Ni-YSZ |
| Epaisseur | µm | 315 |
| Conductivité thermique | W m⁻¹ K⁻¹ | 13,1 |
| Conductivité électrique | Ω⁻¹ m⁻¹ | 10⁵ |
| Porosité | | 0,37 |
| Perméabilité | m² | 10⁻¹³ |
| Tortuosité | | 4 |
| Densité de courant | A.m⁻² | 5300 |

| **Anode 4** | | |
|---|---|---|
| Matériau constitutif | | LSM |
| Epaisseur | µm | 20 |
| Conductivité thermique | W m⁻¹ K⁻¹ | 9,6 |
| Conductivité électrique | Ω⁻¹ m⁻¹ | 1 10⁴ |
| Porosité | | 0,37 |
| Perméabilité | m² | 10⁻¹³ |
| Tortuosité | | 4 |
| Densité de courant | A.m⁻² | 2000 |

| **Electrolyte 3** | | |
|---|---|---|
| Matériau constitutif | | YSZ |
| Epaisseur | µm | |
| Résistivité | Ω m | 0,42 |

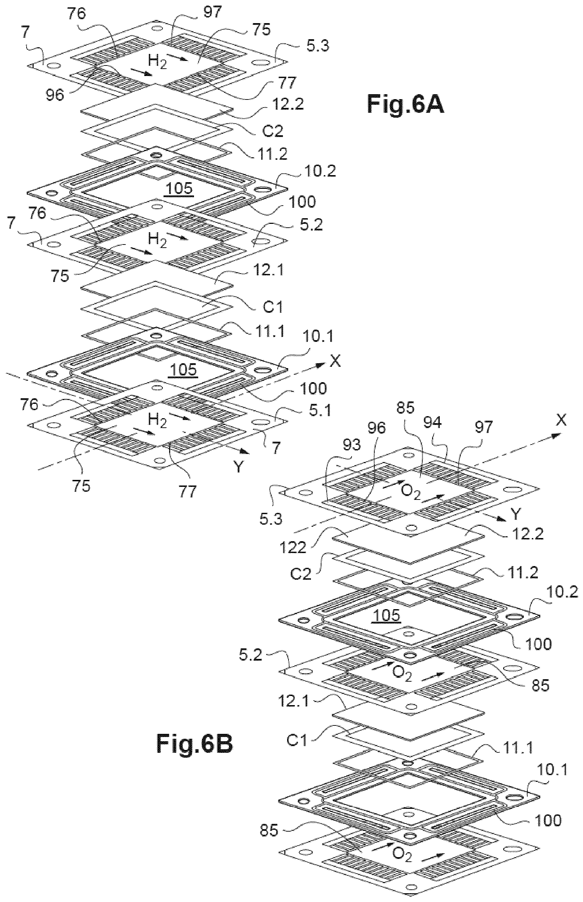

On a représenté de manière schématique en figure 6A et 6B, un électrolyseur haute température à oxydes solides (SOEC) selon l'invention permettant en son sein soit l'électrolyse de la vapeur d'eau, soit l'électrolyse simultanée de la vapeur d'eau et du dioxyde de carbone.

Le réacteur d'électrolyse comporte un empilement de cellules d'électrolyse élémentaires de type SOEC C1, C2, C3 formées chacune d'une cathode 2.1, 2.2, d'une anode 4.1, 4.2 et d'un électrolyte 3.1, 3.2 , intercalé entre la cathode et l'anode.

Une pluralité d'interconnecteurs 5.1, 5.2, 5.3 électrique et fluidique sont agencés individuellement entre deux cellules élémentaires adjacentes avec une de ses faces en contact électrique avec l'anode d'une des deux cellules élémentaires et l'autre de ses faces en contact électrique avec la cathode de l'autre des deux cellules élémentaires.

Chaque interconnecteur 5.1, 5.2, 5.3 permet d'assurer une circulation du gaz (H₂O/H₂ ou mélange H₂+CO₂ ou CO) aux cathodes des cellules à courant croisé à 90° avec la circulation du gaz récupéré (O₂ et le gaz drainant) aux anodes des cellules.

Une pluralité de cadres d'isolation électrique et d'étanchéité 10.1, 10.2 sont agencés individuellement entre deux interconnecteurs adjacents respectivement 5.1 et 5.2 ; 5.2 et 5.3. Chaque cadre d'étanchéité est allongé selon deux axes de symétrie orthogonaux entre eux, et est percé à sa périphérie de leur partie centrale, d'au moins quatre lumières 101 à 104. Les première 101 et deuxième 102 lumières de chaque cadre sont allongées sur une longueur correspondant à une partie de la longueur de la partie centrale selon l'un des axes. Les troisième 103 et quatrième 104 lumières de chaque cadre sont allongées sur une longueur correspondant sensiblement à la longueur de la partie centrale selon l'autre des axes.

Chaque cadre 10.1, 10.2 comporte une partie centrale percée d'une cinquième lumière 105.

Chaque cadre d'étanchéité 10.1, 10.2 est de préférence en mica sur lequel un joint 100 en verre ou en vitrocéramique est déposé.

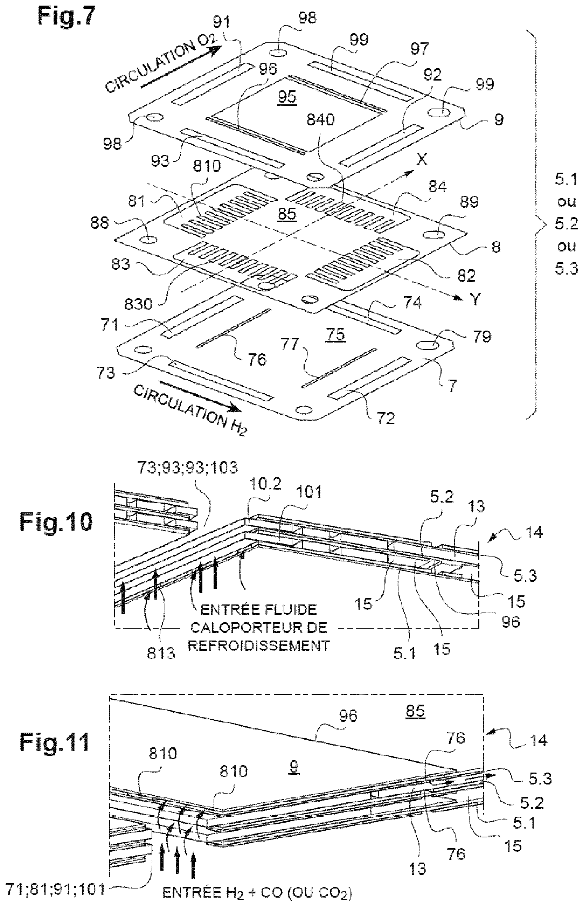

Comme illustré en figure 7, un interconnecteur 5.1, 5.2, 5.3 est constitué de trois tôles planes 7, 8, 9 allongées selon deux axes de symétrie (X, Y) orthogonaux entre eux, les tôles planes étant stratifiées et assemblées entre elles par soudure laser par transparence.

Une tôle centrale 8 est intercalée entre une première 7 et une deuxième 9 tôle d'extrémité.

La première 7 tôle d'extrémité est destinée à venir en contact mécanique avec le plan d'une cathode 2.1 d'une cellule (C1) d'électrolyse élémentaire et la tôle centrale 8 est destinée à venir en contact mécanique avec le plan d'une anode 4.2 d'une cellule (C2) d'électrolyse élémentaire adjacente.

Chacune des première 7 et deuxième 9 tôles d'extrémité est en outre avec un cadre d'étanchéité 10.1, 10.2 agencé chacun entre deux interconnecteurs 5.1 et 5.2, ou 5.2 et 5.3.

Par ailleurs, pour réaliser l'étanchéité du côté des anodes 4.1, 4.2, on intercale un joint d'étanchéité 11.1, 11.2 autour de chacune de ces anodes.

Enfin, il est prévu un élément de contact électrique 12.1, 12.2 pour réaliser la continuité du contact électrique entre chaque interconnecteur 5.1 à 5.3 et une cathode 2.1, 2.2. Bien que non représenté, un autre élément de contact électrique est prévu entre chaque interconnecteur 5.1 à 5.3 et une anode 4.2, 4.3.

Pour réaliser l'empilement, on guide l'ensemble des composants par des tirants ou colonnes positionnées au sein d'un seul trou circulaire 78, 88, 98, 108 à fonction de centrage au sein de chaque composant et d'un seul trou oblong 78, 88, 98, 108 à fonction de positionnement pour assurer une mise en position correcte en maitrisant les déplacements libres et les déplacements bloqués. Une seule colonne de centrage et une seule colonne de positionnement sont suffisantes pour positionner correctement l'empilement. Les deux autres trous rond et oblong de l'interconnecteur non utilisés pour réaliser cet empilement sont nécessaires pour un retournement tête-bêche comme décrit-ci-après.

On décrit maintenant en référence à la figure 7, le mode de réalisation des tôles 7, 8, 9 d'un interconnecteur 5.1, 5.2, 5.3 dédié à l'électrolyse de la vapeur d'eau et leur assemblage pour mettre en oeuvre le procédé d'électrolyse simultanée selon l'invention.

Une des tôles d'extrémité 7 dite première tôle d'extrémité, et la tôle centrale 8 comportent chacune une partie centrale non percée 75, 85.

Cette première tôle d'extrémité 7 est percée à la périphérie de sa partie centrale 75, de quatre lumières 71 à 74. La première 71 et deuxième 72 lumières est allongée sur une longueur correspondant à une partie de la longueur de la partie centrale selon l'un des axes X, tandis que la troisième 73 et quatrième 74 lumières est allongée sur une longueur correspondant sensiblement à la longueur de la partie centrale selon l'autre des axes Y.

Il en va de même pour la tôle centrale 8: elle est percée à la périphérie de sa partie centrale 85, de quatre lumières 81 à 84. Les première 81 et deuxième 82 lumières sont allongées sur une longueur correspondant à une partie de la longueur de la partie centrale selon l'un des axes X, tandis que les troisième 83 et quatrième 84 lumières de chaque tôle sont allongées sur une longueur correspondant sensiblement à la longueur de la partie centrale selon l'autre des axes Y.

La première tôle d'extrémité 7, comporte en outre une cinquième 76 et sixième 77 lumières agencées symétriquement de part et d'autre de l'axe X, à l'intérieur de ses premières à quatrième lumières, et sont allongées sur une longueur correspondant sensiblement à la longueur de la partie centrale selon l'axe X.

La deuxième tôle d'extrémité 9 comporte, à la périphérie de sa partie centrale, de quatre lumières 91 à 94. Les première 91 et deuxième 92 lumières sont allongées sur une longueur correspondant à une partie de la longueur de la partie centrale selon l'un des axes X, tandis que les troisième 93 et quatrième 94 lumières sont allongées sur une longueur correspondant sensiblement à la longueur de la partie centrale selon l'autre des axes Y. La partie centrale de la deuxième tôle d'extrémité 9 est en outre percée d'une cinquième lumière 95.

La deuxième tôle d'extrémité 9 comporte en outre une sixième 96 et septième 97 lumières agencées symétriquement de part et d'autre de l'axe Y, à l'intérieur de ses premières à quatrième lumières 91 à 94. Ces sixième 96 et septième 97 lumières sont allongées sur une longueur correspondant sensiblement à la longueur de la partie centrale 95 selon l'autre des axes Y.

Les première à quatrième lumières 81 à 84 de la tôle centrale 8 sont élargies par rapport respectivement aux première à quatrième lumières 71 à 74, 91 à 94 de chaque tôle d'extrémité 7, 9.

Toutes les lumières élargies 81 à 84 de la tôle centrale comportent dans leur partie élargie, des languettes de tôles 810, 820, 830, 840 espacées les unes des autres en formant un peigne définissant des fentes.

Pour réaliser un interconnecteur 5.1 à 5.3, on stratifie et on assemble, de préférence par soudure les trois tôles 7, 8, 9 ensemble.

Les languettes de tôles 810, 820, 830, 840 forment alors des entretoises d'espacement entre première 7 et deuxième 9 tôles d'extrémité.

Chacune des première à quatrième lumières de l'une des trois tôles est en communication fluidique individuellement respectivement avec l'une des première à quatrième lumières correspondantes des deux autres tôles.

La première lumière 71 de la première tôle d'extrémité 7 est en communication fluidique avec la cinquième lumière 76 de la première tôle 7 d'extrémité par le biais des fentes de la première lumière élargie 81 de la tôle centrale 8.

La deuxième lumière 72 de la première tôle d'extrémité 7 est en communication fluidique avec la sixième lumière 77 de la première tôle d'extrémité 7 par le biais des fentes de la deuxième lumière élargie 82 de la tôle centrale 8.

La troisième 93 lumière de la deuxième tôle d'extrémité 9 est en communication fluidique avec la cinquième lumière 95 de la deuxième tôle d'extrémité 9 par le biais des fentes de la troisième lumière élargie 83 de la tôle centrale 8 et par le biais de la sixième lumière 96 de la deuxième tôle d'extrémité 9.

La quatrième lumière 94 de la deuxième tôle d'extrémité 9 est en communication fluidique avec la cinquième lumière 95 de la deuxième tôle d'extrémité par le biais des fentes de la quatrième lumière élargie 84 de la tôle centrale 8 et par le biais de la septième lumière 97 de la deuxième tôle d'extrémité 9.

Comme symbolisé par les flèches en figures 6A et 6B, lorsqu'on souhaite réaliser une électrolyse de l'eau, on alimente et on distribue la vapeur d'eau à chaque cathode des deux cellules (C1, C2) élémentaires adjacentes et on alimente et on distribue un gaz drainant à chaque anode des deux cellules élémentaires (C1, C2).

Dans le réacteur qui vient d'être décrit, tous les compartiments cathodiques dans lesquels circulent la vapeur d'eau alimentée H2O et l'hydrogène produit H2 communiquent entre eux. La réaction d'électrolyse produit simultanément mais de manière séparée de l'oxygène qui est récolté par tous les compartiments anodiques qui communiquent entre eux.

Selon l'invention, on réalise en outre un réacteur-échangeur catalytique 14 de méthanation avec un maximum de composants communs avec le réacteur d'électrolyse qui vient d'être décrit.

Ainsi, les modules élémentaires 5.1 à 5.3 qui vont délimiter à la fois la chambre de réaction de méthanation et celle de refroidissement sont identiques aux interconnecteurs qui viennent d'être décrits pour le réacteur d'électrolyse.

En outre, les cadres d'étanchéités 10.1, 10.2 qui délimitent également à la fois la chambre de réaction de méthanation et celle de refroidissement sont identiques aux cadres d'étanchéité qui viennent d'être décrits pour le réacteur d'électrolyse.

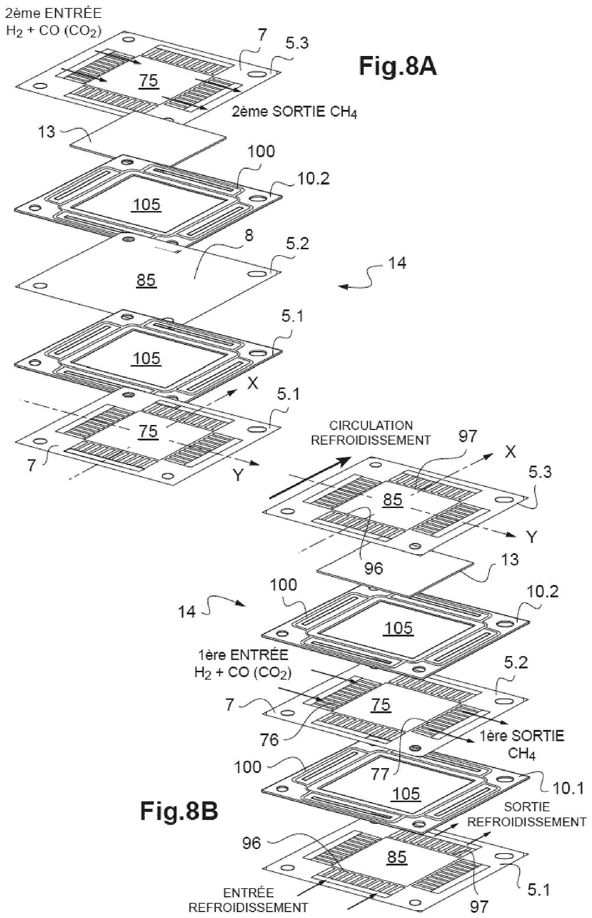

Ainsi, en référence aux figures 8A, 8B, 9 à 11, un réacteur-échangeur 14 comportant un empilement des éléments suivants:
- au moins trois modules élémentaires constitués chacun par les interconnecteurs 5.1, 5.2, 5.3,
- au moins deux cadres d'étanchéité 10.1, 10.2 tels que ceux décrits précédemment,
- une plaque-support 13 supportant un matériau catalytique solide mais poreux.

Dans ce réacteur-échangeur 14, le module central 5.2 est agencé tête-bêche par rapport aux deux modules d'extrémité 5.1, 5.3 de sorte que la première tôle d'extrémité 7 du module central 5.2 est en regard de la première tôle d'extrémité 7 d'un des modules d'extrémité 5.3 et que la deuxième tôle d'extrémité 9 du module central 5.2 est en regard de la deuxième tôle d'extrémité 9 de l'autre des modules d'extrémité 5.1.

Chaque cadre d'étanchéité 10.1, 10.2 est intercalé entre deux modules et en contact avec une de leurs deux tôles d'extrémité.

La plaque support 13 est agencée à l'intérieur du cadre d'étanchéité 10.2 et en appui contre les parties centrales 75 de la première tôle d'extrémité 7 du module central 5.2 et de l'autre des modules d'extrémité 5.3.

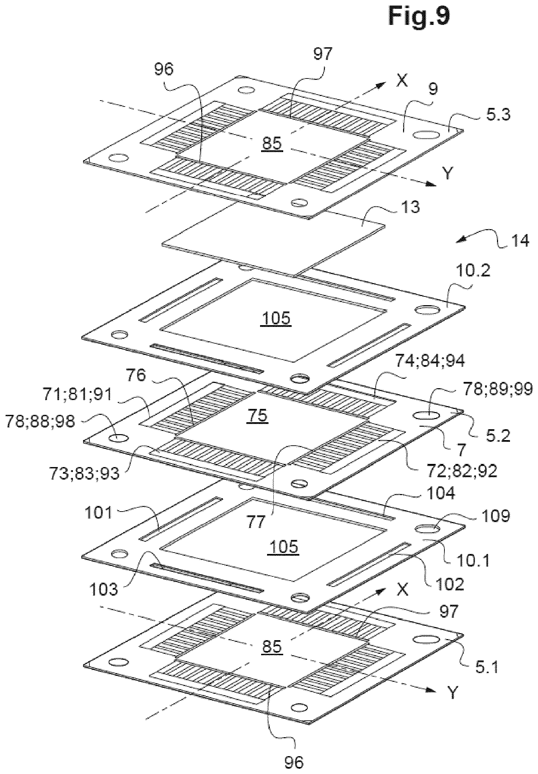

Chaque cadre d'étanchéité 10.1, 10.2 peut comprendre un cordon 100 d'étanchéité supplémentaire en verre /vitrocéramique (figures 8A, 8B) ou non (figure 9).

Comme symbolisé par les flèches en figures 8A et 8B, on alimente et on distribue un mélange d'hydrogène et de monoxyde ou dioxyde de carbone en l'injectant dans les premières lumières des modules élémentaires et cadres d'étanchéité 10.1, 10.2, et on récupère le méthane produit, dans les deuxième lumières et simultanément on alimente un fluide caloporteur de refroidissement dans les troisième lumières que l'on récupère dans les quatrième lumières.

D'autres variantes et avantages de l'invention peuvent être réalisés sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

Dans les exemples décrits, on utilise des interconnecteurs dédiés initialement à des réacteurs d'électolyse/co-électrolyse SOEC ou piles SOFC pour réaliser un réacteur-échangeur catalytique de méthanation ou de reformage à échangeur thermique intégrée.

D'autres types de réactions catalytiques nécessitant une régulation thermique que celles décrites peuvent être envisagées.

### Références citées

[1]: Fabien Ocampo et al, « Methanation of carbon dioxide over nickel-based Ce0.72Zr0.28O2 mixed oxide catalysts prepared by sol-gel method», Journal of Applied Catalysis A: General 369 (2009) 90-96;
[2]: Dayan Tiang et al, « Bimetallic Ni-Fe total-methanation catalyst for the production of substitute natural gas under high pressure », Journal of Fuel 104 (2013) 224-229.

## Revendications

1. Module élémentaire (5.1, 5.2, 5.3) de distribution de gaz réactifs et produits de réaction pour réacteur soit d'électrolyse à haute température de la vapeur d'eau, soit de co-électrolyse à haute température de vapeur d'eau et de dioxyde de carbone, pour pile à combustible SOFC, ou pour réacteur-échangeur catalytique réalisé par empilement, constitué de trois tôles (7, 8, 9) planes, allongées selon deux axes de symétrie (X, Y) orthogonaux entre eux dont :
- une des tôles d'extrémité (7) dite première tôle d'extrémité, et la tôle centrale (8) comportent chacune une partie centrale non percée (75, 85) et sont percées chacune, à la périphérie de sa partie centrale, d'au moins quatre lumières (71 à 74, 81 à 84), les première (71, 81) et deuxième (72, 82) lumières de chaque tôle étant allongées sur une longueur correspondant à une partie de la longueur de la partie centrale selon l'un des axes X, tandis que les troisième (73, 83) et quatrième (74, 84) lumières de chaque tôle sont allongées sur une longueur correspondant sensiblement à la longueur de la partie centrale selon l'autre des axes Y,
- la première tôle d'extrémité (7), comporte en outre une cinquième (76) et sixième (77) lumières agencées symétriquement de part et d'autre de l'axe X, à l'intérieur de ses premières à quatrième lumières (71 à 74), et sont allongées sur une longueur correspondant sensiblement à la longueur de la partie centrale selon l'axe X,
- l'autre des tôles d'extrémité (9), dite deuxième tôle d'extrémité, comporte à la périphérie de sa partie centrale, d'au moins quatre lumières (91 à 94), les première (91) et deuxième (92) lumières étant allongées sur une longueur correspondant à une partie de la longueur de la partie centrale selon l'un des axes X, tandis que les troisième (93) et quatrième (94) lumières sont allongées sur une longueur correspondant sensiblement à la longueur de la partie centrale selon l'autre des axes Y, la partie centrale de la deuxième tôle d'extrémité (9) étant en outre percée d'une cinquième lumière (95),
- l'autre des tôles d'extrémité (9), comporte en outre une sixième (96) et septième (97) lumières agencées symétriquement de part et d'autre de l'axe Y, à l'intérieur de ses premières à quatrième lumières (91 à 94), et sont allongées sur une longueur correspondant sensiblement à la longueur de la partie centrale selon l'autre des axes Y, dans lequel :
- les première à quatrième lumières (81 à 84) de la tôle centrale (8) sont élargies par rapport respectivement aux première à quatrième lumières (71 à 74, 91 à 94) de chaque tôle d'extrémité,
- toutes les lumières élargies (81 à 84) de la tôle centrale comportent dans leur partie élargie, des languettes de tôles (810, 820, 830, 840) espacées les unes des autres en formant un peigne définissant des fentes,
et dans lequel les trois tôles sont stratifiées et assemblées entre elles telles que:
- les languettes de tôles (810, 820, 830, 840) forment des entretoises d'espacement entre première et deuxième tôles d'extrémité,
- chacune des première à quatrième lumières de l'une des trois tôles est en communication fluidique individuellement respectivement avec l'une des première à quatrième lumières correspondantes des deux autres tôles,
- la première lumière (71) de la première tôle d'extrémité (7) est en communication fluidique avec la cinquième lumière (76) de la première tôle d'extrémité par le biais des fentes de la première lumière élargie (81) de la tôle centrale,
- la deuxième lumière (72) de la première tôle d'extrémité (7) est en communication fluidique avec la sixième lumière (77) de la première tôle d'extrémité par le biais des fentes de la deuxième lumière élargie (82) de la tôle centrale,
- la troisième (93) lumière de la deuxième tôle d'extrémité (9) est en communication fluidique avec la cinquième lumière (95) de la deuxième tôle d'extrémité par le biais des fentes de la troisième lumière élargie (83) de la tôle centrale et par le biais de la sixième lumière (96) de la deuxième tôle d'extrémité (9),
- la quatrième lumière (94) de la deuxième tôle d'extrémité (9) est en communication fluidique avec la cinquième lumière (95) de la deuxième tôle d'extrémité par le biais des fentes de la quatrième lumière élargie (84) de la tôle centrale et par le biais de la septième lumière (97) de la deuxième tôle d'extrémité (9).

2. Module élémentaire selon la revendication 1, les trois tôles (7, 8, 9) étant assemblées entre elles par soudure ou par brasure.

3. Module élémentaire selon l'une des revendications précédentes, les trois tôles (7, 8, 9) étant en acier ferritique à environ 20% de chrome.

4. Module élémentaire selon l'une des revendications précédentes, chacune des trois tôles (7, 8, 9) a une épaisseur comprise entre 0,1 et 1mm.

5. Réacteur-échangeur catalytique (14) comportant un empilement des éléments suivants:
- au moins trois modules élémentaires (5.1, 5.2, 5.3) selon l'une des revendications précédentes,
- au moins un cadre d'étanchéité (10.2) allongé selon deux axes de symétrie orthogonaux entre eux, chaque cadre étant percé à sa périphérie de leur partie centrale, d'au moins quatre lumières (101 à 104), les première (101) et deuxième (102) lumières de chaque cadre étant allongées sur une longueur correspondant à une partie de la longueur de la partie centrale selon l'un des axes, tandis que les troisième (103) et quatrième (104) lumières de chaque cadre sont allongées sur une longueur correspondant sensiblement à la longueur de la partie centrale selon l'autre des axes, chaque cadre comportant une partie centrale percée d'une cinquième lumière (105),
- une plaque-support (13), supportant un matériau catalytique solide mais poreux,
l'empilement étant tel que :
- le module central (5.2) est agencé tête-bêche par rapport aux deux modules d'extrémité (5.1, 5.3) de sorte que la première tôle d'extrémité (7) du module central (5.2) est en regard de la première tôle d'extrémité (7) d'un des modules d'extrémité (5.3) et que la deuxième tôle d'extrémité (9) du module central (5.2) est en regard de la deuxième tôle d'extrémité (9) de l'autre des modules d'extrémité (5.1),
- un cadre d'étanchéité (10.2) est intercalé entre le module central (5.2) et un des modules d'extrémité (5.3) et en contact avec une de leurs deux tôles d'extrémité,
- la plaque support (13) est agencée à l'intérieur du cadre d'étanchéité (10.2) et en appui contre les parties centrales (75) non percées de la première tôle d'extrémité (7) du module central (5.2) et de l'un des modules d'extrémité (5.3), et définit une chambre de réaction catalytique (13),
- l'espace délimité entre les deux parties centrales (95) percées du module central (5.2) de l'autre des modules d'extrémité (5.1) définit une chambre de circulation (15) d'un fluide caloporteur.
le réacteur comportant de préférence au moins deux cadres d'étanchéité (10.1, 10.2), l'empilement étant tel que :
- l'autre cadre d'étanchéité (10.1) est intercalé entre le module central (5.2) et l'autre des modules d'extrémité (5.1) et en contact avec une de leurs deux tôles d'extrémité,
- la chambre de circulation (15) du fluide caloporteur est délimitée par l'autre cadre d'étanchéité (10,1).

6. Réacteur-échangeur catalytique (14) selon la revendication 6, constituant un réacteur-échangeur de méthanation ou un réacteur-échangeur de reformage.

7. Procédé de fonctionnement d'un réacteur-échangeur de méthanation conforme à la revendication 6, selon lequel on alimente et on distribue un mélange d'hydrogène et de monoxyde ou dioxyde de carbone en l'injectant dans les premières lumières (71, 81, 91, 101), on récupère le méthane produit dans les deuxième lumières (72, 82, 92, 102), et simultanément on alimente un fluide caloporteur de refroidissement dans les troisième lumières (73, 83, 93, 103) et on le récupère dans les quatrième lumières (74, 84, 94, 104).

8. Procédé de fonctionnement d'un réacteur-échangeur de reformage conforme à la revendication 6, selon lequel on alimente et on distribue un mélange de méthane et de vapeur d'eau en l'injectant dans les premières lumières (71, 81, 91, 101), on récupère le gaz de synthèse produit contenant du monoxyde de carbone (CO) et de l'hydrogène (H₂) dans les deuxième lumières (72, 82, 92, 102), et simultanément on alimente un fluide caloporteur de réchauffage dans les troisième lumières (73, 83, 93, 103) et on le récupère dans les quatrième lumières (74, 84, 94, 104).

9. Réacteur d'électrolyse à haute température de la vapeur d'eau ou de co-électrolyse à haute température de vapeur d'eau et de dioxyde de carbone, comportant un empilement de cellules d'électrolyse (C1, C2, C3) élémentaires de type SOEC formées chacune d'une cathode (2.1, 2.2..), d'une anode (4.1, 4.2) et d'un électrolyte (3.1, 3.2) intercalé entre la cathode et l'anode, d'une pluralité d'interconnecteurs (5) électrique et fluidique constitués chacun d'un module élémentaire selon l'une des revendications 1 à 4, agencés chacun entre deux cellules élémentaires adjacentes avec la première (7) tôle d'extrémité en contact électrique avec la cathode (2.1) de l'une des deux cellules (C1) élémentaires et la tôle centrale (8) en contact électrique avec l'anode (4.2) de l'autre (C2) des deux cellules élémentaires, et de cadres d'étanchéité agencés chacun entre deux modules élémentaires et en étant en contact avec une de leurs deux tôles d'extrémité

10. Ensemble de réacteurs comprenant :
- au moins un réacteur d'électrolyse ou de co-électrolyse selon la revendication 9,
- au moins un réacteur-échangeur catalytique de méthanation, selon la revendication 13, relié en aval du réacteur d'électrolyse ou de co-électrolyse.

11. Ensemble de réacteurs selon la revendication 10, comprenant au moins une enceinte étanche apte à être mise sous pression donnée, typiquement comprise entre comprises entre 1 et 100 bars, et dans laquelle est logée au moins le réacteur-échangeur de méthanation et/ou le réacteur d'électrolyse/co-électrolyse.

12. Pile à combustible SOFC, comportant un empilement de cellules électrochimiques (C1, C2, C3) élémentaires de type SOFC formées chacune d'une anode (2.1, 2.2..), d'une cathode (4.1, 4.2) et d'un électrolyte (3.1, 3.2) intercalé entre la cathode et l'anode, d'une pluralité d'interconnecteurs (5) électrique et fluidique constitués chacun d'un module élémentaire selon l'une des revendications 1 à 4, agencés chacun entre deux cellules élémentaires adjacentes avec la première (7) tôle d'extrémité en contact électrique avec l'anode (2.1) de l'une des deux cellules (C1) élémentaires et la tôle centrale (8) en contact électrique avec la cathode (4.2) de l'autre (C2) des deux cellules élémentaires, et de cadres d'étanchéité agencés chacun entre deux modules élémentaires

13. Ensemble de réacteurs comprenant :
- au moins une pile à combustible SOFC selon la revendication 12,
- au moins un réacteur-échangeur catalytique de reformage, selon la revendication 13, relié en amont de la pile à combustible SOFC ;
- de préférence au moins une enceinte étanche apte à être mise sous pression donnée et dans laquelle est logée soit uniquement la pile à combustible SOFC, soit à la fois le réacteur-échangeur de reformage et la pile à combustible SOFC.

14. Procédé de réalisation d'un réacteur-échangeur catalytique de méthanation selon lequel on réalise les étapes suivantes :
- après fonctionnement selon un nombre de cycles donné, démontage d'un réacteur soit d'électrolyse à haute température de la vapeur d'eau, soit de co-électrolyse à haute température de vapeur d'eau et de dioxyde de carbone, comportant un empilement de cellules d'électrolyse (C1, C2, C3) élémentaires de type SOEC formées chacune d'une cathode (2.1, 2.2..), d'une anode (4.1, 4.2) et d'un électrolyte (3.1, 3.2) intercalé entre la cathode et l'anode, et une pluralité d'interconnecteurs (5) électrique et fluidique constitués chacun d'un module élémentaire selon l'une des revendications 1 à 4, agencés chacun entre deux cellules élémentaires adjacentes avec la première (7) tôle d'extrémité en contact électrique avec l'anode (2.1) de l'une des deux cellules (C1) élémentaires et la tôle centrale (8) en contact électrique avec la cathode (4.2) de l'autre (C2) des deux cellules élémentaires, de cadres d'étanchéité agencés chacun entre deux modules élémentaires et en étant en contact avec une de leurs deux tôles d'extrémité,
- enlèvement des cellules d'électrolyse,
- réalisation d'un nouvel empilement avec :
• intercalage d'un cadre d'étanchéité (10.2) entre un module élémentaire central (5.2) et un des modules adjacents (5.3) et retournement tête-bêche d'un module élémentaire sur deux de sorte à avoir la première tôle d'extrémité d'un module élémentaire en regard la première tôle d'extrémité d'un module élémentaire adjacent,
• mise en place d'une plaque-support supportant un matériau catalytique solide mais poreux de méthanation avec appui contre les parties centrales non percées des tôles centrales du module élémentaire central et du module adjacent séparés par le cadre d'étanchéité (10.2), afin de définir une chambre de méthanation (13),
• réalisation d'un espace délimité entre les deux parties centrales (85) percées du module élémentaire central (5.2) de l'autre des modules adjacents (5.1), afin de définir une chambre de circulation (15) d'un fluide caloporteur.

15. Procédé de réalisation d'un réacteur-échangeur catalytique de reformage selon lequel on réalise les étapes suivantes :
- après fonctionnement selon un nombre de cycles donné, démontage d'un pile à combustible SOFC, comportant un empilement de cellules électrochimiques (C1, C2, C3) élémentaires de type SOFC formées chacune d'une anode (2.1, 2.2..), d'une cathode (4.1, 4.2) et d'un électrolyte (3.1, 3.2) intercalé entre la cathode et l'anode, d'une pluralité d'interconnecteurs (5) électrique et fluidique constitués chacun d'un module élémentaire selon l'une des revendications 1 à 4, agencés chacun entre deux cellules élémentaires adjacentes avec la première (7) tôle d'extrémité en contact électrique avec l'anode (2.1) de l'une des deux cellules (C1) élémentaires et la tôle centrale (8) en contact électrique avec la cathode (4.2) de l'autre (C2) des deux cellules élémentaires, et de cadres d'étanchéité agencés chacun entre deux modules élémentaires,
- enlèvement des cellules électrochimiques,
- réalisation d'un nouvel empilement avec :
• intercalage d'un cadre d'étanchéité (10.2) entre un module élémentaire central (5.2) et un des modules adjacents (5.3) et retournement tête-bêche d'un module élémentaire sur deux de sorte à avoir la première tôle d'extrémité d'un module élémentaire en regard la première tôle d'extrémité d'un module élémentaire adjacent,
• mise en place d'une plaque-support supportant un matériau catalytique solide mais poreux de reformage avec appui contre les parties centrales non percées des tôles centrales du module élémentaire central et du module adjacent séparés par le cadre d'étanchéité (10.2), afin de définir une chambre de reformage (13), réalisation d'un espace délimité entre les deux parties centrales (85) percées du module élémentaire central (5.2) de l'autre des modules adjacents (5.1), afin de définir une chambre de circulation (15) d'un fluide caloporteur

## Patentansprüche

1. Elementares Modul (5.1, 5.2, 5.3) zur Verteilung von Reaktionsgasen und Reaktionsprodukten für einen Reaktor entweder zur Wasserdampf-Hochtemperaturelektrolyse oder zur Wasserdampf- und Kohlendioxid-Hochtemperatur-Co-Elektrolyse für eine SOFC-Brennstoffzelle oder für einen durch Stapelung hergestellten katalytischen Austauschreaktor, das von drei ebenen Blechen (7, 8, 9) gebildet ist, die gemäß zweier Symmetrieachsen (X, Y) liegen, die orthogonal zueinander verlaufen, wovon:
- eins der Endbleche (7), das erste Endblech, und das mittlere Blech (8) jeweils einen nicht durchbrochenen Mittelabschnitt (75, 85) aufweisen und jeweils am Rand seines Mittelabschnitts von wenigstens vier Öffnungen (71 bis 74, 81 bis 84) durchbrochen sind, wobei die erste (71, 81) und zweite (72, 82) Öffnung jedes Blechs auf einer Länge langgestreckt sind, die einem Abschnitt der Länge des Mittelabschnitts gemäß einer der X-Achsen entspricht, während die dritte (73, 83) und vierte (74, 84) Öffnung jedes Blechs auf einer Länge langgestreckt sind, die im Wesentlichen der Länge des Mittelabschnitts gemäß der anderen der Y-Achsen entspricht,
- das erste Endblech (7) ferner eine fünfte (76) und sechste (77) Öffnung aufweist, die beiderseits der X-Achse einwärts von seiner ersten bis vierten Öffnung (71 bis 74) symmetrisch angeordnet sind und auf einer Länge langgestreckt sind, die im Wesentlichen der Länge des Mittelabschnitts gemäß der X-Achse entspricht,
- das andere der Endbleche (9), das zweite Endblech, am Rand seines Mittelabschnitts von wenigstens vier Öffnungen (91 bis 94) aufweist, wobei die erste (91) und zweite (92) Öffnung auf einer Länge langgestreckt sind, die einem Abschnitt der Länge des Mittelabschnitts gemäß einer der X-Achsen entspricht, während die dritte (93) und vierte (94) Öffnung auf einer Länge langgestreckt sind, die im Wesentlichen der Länge des Mittelabschnitts gemäß der anderen der Y-Achsen entspricht, wobei der Mittelabschnitt des zweiten Endblechs (9) ferner von einer fünften Öffnung (95) durchbrochen ist,
- das andere der Endbleche (9) ferner eine sechste (96) und siebte (97) Öffnung aufweist, die beiderseits der Y-Achse einwärts von seiner ersten bis vierten Öffnung (91 bis 94) symmetrisch angeordnet sind und auf einer Länge langgestreckt sind, die im Wesentlichen der Länge des Mittelabschnitts gemäß der anderen der Y-Achsen entspricht, wobei:
- die erste bis vierte Öffnung (81 bis 84) des mittleren Blechs (8) jeweils im Verhältnis zur ersten bis vierten Öffnung (71 bis 74, 91 bis 94) jedes Endblechs verbreitert sind,
- alle verbreiterten Öffnungen (81 bis 84) des mittleren Blechs in ihrem verbreiterten Abschnitt Blechzungen (810, 820, 830, 840) aufweisen, die voneinander beabstandet sind, wobei sie einen Kamm bilden, der Schlitze definiert,
und wobei die drei Bleche so miteinander laminiert und verbunden sind, dass:
- die Blechzungen (810, 820, 830, 840) Abstandshalter zwischen ersten und zweiten Endblechen bilden,
- wobei jede der ersten bis vierten Öffnung eines der drei Bleche jeweils einzeln mit einer der entsprechenden ersten bis vierten Öffnung der zwei anderen Bleche in Fluidverbindung steht,
- die erste Öffnung (71) des ersten Endblechs (7) über die Schlitze der ersten verbreiterten Öffnung (81) des mittleren Blechs mit der fünften Öffnung (76) des ersten Endblechs in Fluidverbindung steht,
- die zweite Öffnung (72) des ersten Endblechs (7) über die Schlitze der zweiten verbreiterten Öffnung (82) des mittleren Blechs mit der sechsten Öffnung (77) des ersten Endblechs in Fluidverbindung steht,
- die dritte Öffnung (93) des zweiten Endblechs (9) über die Schlitze der dritten verbreiterten Öffnung (83) des mittleren Blechs und über die sechste Öffnung (96) des zweiten Endblechs (9) mit der fünften Öffnung (95) des zweiten Endblechs in Fluidverbindung steht,
- die vierte Öffnung (94) des zweiten Endblechs (9) über die Schlitze der vierten verbreiterten Öffnung (84) des mittleren Blechs und über die siebte Öffnung (97) des zweiten Endblechs (9) mit der fünften Öffnung (95) des zweiten Endblechs in Fluidverbindung steht.

2. Elementares Modul nach Anspruch 1, wobei die drei Bleche (7, 8, 9) durch Schweißen oder Löten miteinander verbunden sind.

3. Elementares Modul nach einem der vorhergehenden Ansprüche, wobei die drei Bleche (7, 8, 9) aus ferritischem Stahl mit ca. 20 % Chrom sind.

4. Elementares Modul nach einem der vorhergehenden Ansprüche, wobei jedes der drei Bleche (7, 8, 9) eine Dicke zwischen 0,1 und 1 mm aufweist.

5. Katalytischer Austauschreaktor (14) mit einem Stapel der folgenden Elemente:
- wenigstens drei elementare Module (5.1, 5.2, 5.3) nach einem der vorhergehenden Ansprüche,
- wenigstens einen Dichtungsrahmen (10.2), der gemäß zweier Symmetrieachsen langgestreckt ist, die orthogonal zueinander verlaufen, wobei jeder Rahmen an seinem Rand ihres Mittelabschnitts von wenigstens vier Öffnungen (101 bis 104) durchbrochen ist, wobei die erste (101) und zweite (102) Öffnung jedes Rahmens auf einer Länge langgestreckt sind, die einem Abschnitt der Länge des Mittelabschnitts gemäß einer der Achsen entspricht, während die dritte (103) und vierte (104) Öffnung jedes Rahmens auf einer Länge langgestreckt sind, die im Wesentlichen der Länge des Mittelabschnitts gemäß der anderen der Achsen entspricht, wobei jeder Rahmen einen Mittelabschnitt aufweist, der von einer fünften Öffnung (105) durchbrochen ist,
- eine Trägerplatte (13), die ein festes aber poröses katalytisches Material trägt, wobei der Stapel so beschaffen ist, dass:
- das mittlere Modul (5.2) im Verhältnis zu den zwei Endmodulen (5.1, 5.3) entgegengesetzt so angeordnet ist, dass sich das erste Endblech (7) des mittleren Moduls (5.2) gegenüber dem ersten Endblech (7) eines der Endmodule (5.3) befindet und sich das zweite Endblech (9) des mittleren Moduls (5.2) gegenüber dem zweiten Endblech (9) des anderen der Endmodule (5.1) befindet,
- ein Dichtungsrahmen (10.2) zwischen dem mittleren Modul (5.2) und einem der Endmodule (5.3) und in Kontakt mit einem ihrer zwei Endbleche eingefügt ist,
- die Trägerplatte (13) innerhalb des Dichtungsrahmens (10.2) und in Anlage an die nicht durchbrochenen Mittelabschnitte (75) des ersten Endblechs (7) des mittleren Moduls (5.2) und eines der Endmodule (5.3) angeordnet ist und eine katalytische Reaktionskammer (13) definiert,
- der Raum, der zwischen den zwei durchbrochenen Mittelabschnitten (95) des mittleren Moduls (5.2) des anderen der Endmodule (5.1) begrenzt ist, eine Zirkulationskammer (15) eines Wärmeübertragungsfluids definiert,
wobei der Reaktor vorzugsweise wenigstens zwei Dichtungsrahmen (10.1, 10.2) aufweist, wobei der Stapel so beschaffen ist, dass:
- der andere Dichtungsrahmen (10.1) zwischen dem mittleren Modul (5.2) und dem anderen der Endmodule (5.1) und in Kontakt mit einem ihrer zwei Endbleche eingefügt ist,
- die Zirkulationskammer (15) des Wärmeübertragungsfluids vom anderen Dichtungsrahmen (10,1) begrenzt ist.

6. Katalytischer Wärmeaustauschreaktor (14) nach Anspruch 6, der einen Methanisierungs-Austauschreaktor oder einen Reformierungs-Austauschreaktor bildet.

7. Betriebsverfahren eines Methanisierungs-Austauschreaktors nach Anspruch 6, wobei ein Gemisch aus Wasserstoff und Kohlenmonoxid oder -dioxid zugeführt und verteilt wird, indem es in die ersten Öffnungen (71, 81, 91, 101) injiziert wird, das erzeugte Methan in den zweiten Öffnungen (72, 82, 92, 102) aufgefangen wird und gleichzeitig ein Wärmeübertragungsfluid zur Kühlung in die dritten Öffnungen (73, 83, 93, 103) eingespeist wird und es in den vierten Öffnungen (74, 84, 94, 104) aufgefangen wird.

8. Betriebsverfahren eines Reformierungs-Austauschreaktors nach Anspruch 6, wobei ein Gemisch aus Methan und Wasserdampf zugeführt und verteilt wird, indem es in die ersten Öffnungen (71, 81, 91, 101) injiziert wird, das erzeugte Synthesegas, das Kohlenmonoxid (CO) und Wasserstoff (H₂) enthält, in den zweiten Öffnungen (72, 82, 92, 102) aufgefangen wird und gleichzeitig ein Wärmeübertragungsfluid zur Erwärmung in die dritten Öffnungen (73, 83, 93, 103) eingespeist wird und es in den vierten Öffnungen (74, 84, 94, 104) aufgefangen wird.

9. Reaktor zur Wasserdampf-Hochtemperaturelektrolyse oder zur Wasserdampf- und Kohlendioxid-Hochtemperatur-Co-Elektrolyse, der einen Stapel von elementaren SOEC-Elektrolysezellen (C1, C2, C3), jeweils gebildet von einer Kathode (2.1, 2.2..), einer Anode (4.1, 4.2) und einem zwischen der Kathode und der Anode angeordneten Elektrolyten (3.1, 3.2), einer Mehrzahl von elektrischen und fluidischen Interkonnektoren (5), die jeweils von einem elementaren Modul nach einem der Ansprüche 1 bis 4 gebildet sind, die jeweils zwischen zwei elementaren Zellen angeordnet sind, die dem ersten Endblech (7) in elektrischem Kontakt mit der Kathode (2.1) einer der zwei elementaren Zellen (C1) und dem mittleren Blech (8) in elektrischem Kontakt mit der Anode (4.2) der anderen (C2) der zwei elementaren Zellen benachbart sind, und Dichtungsrahmen, die jeweils zwischen zwei elementaren Modulen angeordnet sind und dabei mit einem von deren Endblechen in Kontakt stehen, aufweist

10. Reaktorenanordnung umfassend:
- wenigstens einen Elektrolyse- oder Co-Elektrolyse-Reaktor nach Anspruch 9,
- wenigstens einen katalytischen Methanisierungs-Austauschreaktor nach Anspruch 13, der stromab des Elektrolyse- oder Co-Elektrolyse-Reaktors angeschlossen ist.

11. Reaktorenanordnung nach Anspruch 10, umfassend wenigstens eine dichte Einhausung, die mit einem bestimmten Druck beaufschlagt werden kann, der typischerweise zwischen 1 und 100 bar liegt, und in der wenigstens der katalytische Methanisierungs-Austauschreaktor und/oder der Elektrolyse-/Co-Elektrolyse-Reaktor aufgenommen ist.

12. SOFC-Brennstoffzelle, die einen Stapel von elementaren elektrochemischen SOFC-Zellen (C1, C2, C3), jeweils gebildet von einer Anode (2.1, 2.2..), einer Kathode (4.1, 4.2) und einem Elektrolyten (3.1, 3.2), der zwischen der Kathode und der Anode angeordnet ist, einer Mehrzahl von elektrischen und fluidischen Interkonnektoren (5), die jeweils von einem elementaren Modul nach einem der Ansprüche 1 bis 4 gebildet sind, die jeweils zwischen zwei elementaren Zellen angeordnet sind, die dem ersten Endblech (7) in elektrischem Kontakt mit der Anode (2.1) einer der zwei elementaren Zellen (C1) und dem mittleren Blech (8) in elektrischem Kontakt mit der Kathode (4.2) der anderen (C2) der zwei elementaren Zellen benachbart sind, und Dichtungsrahmen, die jeweils zwischen zwei elementaren Modulen angeordnet sind, aufweist.

13. Reaktorenanordnung umfassend:
- wenigstens eine SOFC-Brennstoffzelle nach Anspruch 12,
- wenigstens einen katalytischen Reformierungs-Austauschreaktor nach Anspruch 13, der stromauf der SOFC-Brennstoffzelle angeschlossen ist;
- vorzugsweise wenigstens eine dichte Einhausung, die mit einem bestimmten Druck beaufschlagt werden kann und in der entweder nur die SOFC-Brennstoffzelle oder sowohl der Reformierungs-Austauschreaktor als auch die SOFC-Brennstoffzelle aufgenommen ist.

14. Verfahren zur Herstellung eines katalytischen Methanisierungs-Austauschreaktors, wobei die folgenden Schritte durchgeführt werden:
- nach Betrieb über eine bestimmte Anzahl von Zyklen, Demontage eines Reaktors zur Wasserdampf-Hochtemperaturelektrolyse oder zur Wasserdampf- und Kohlendioxid-Hochtemperatur-Co-Elektrolyse, der einen Stapel von elementaren SOEC-Elektrolysezellen (C1, C2, C3), jeweils gebildet von einer Kathode (2.1, 2.2..), einer Anode (4.1, 4.2) und einem zwischen der Kathode und der Anode angeordneten Elektrolyten (3.1, 3.2), und eine Mehrzahl von elektrischen und fluidischen Interkonnektoren (5), die jeweils von einem elementaren Modul nach einem der Ansprüche 1 bis 4 gebildet sind, die jeweils zwischen zwei elementaren Zellen angeordnet sind, die dem ersten Endblech (7) in elektrischem Kontakt mit der Kathode (2.1) einer der zwei elementaren Zellen (C1) und dem mittleren Blech (8) in elektrischem Kontakt mit der Anode (4.2) der anderen (C2) der zwei elementaren Zellen benachbart sind, Dichtungsrahmen, die jeweils zwischen zwei elementaren Modulen angeordnet sind und dabei mit einem von deren Endblechen in Kontakt stehen, aufweist,
- Entfernen der Elektrolysezellen,
- Herstellen eines neuen Stapels mit:
• Einfügen eines Dichtungsrahmens (10.2) zwischen ein mittleres elementares Modul (5.2) und eins der benachbarten Module (5.3) und entgegengesetztes Umdrehen jedes zweiten elementaren Moduls, damit das erste Endblech eines elementaren Moduls gegenüber dem ersten Endblech eines benachbarten elementaren Moduls liegt,
• Anbringen einer Trägerplatte, die ein festes aber poröses katalytisches Methanisierungsmaterial trägt, in Anlage an die nicht durchbrochenen Mittelabschnitte der mittleren Bleche des mittleren elementaren Moduls und des benachbarten Moduls, die durch den Dichtungsrahmen (10.2) getrennt sind, um eine Methanisierungskammer (13) zu definieren,
• Herstellen eines begrenzten Raumes zwischen den zwei durchbrochenen Mittelabschnitten (85) des mittleren elementaren Moduls (5.2) des anderen der benachbarten Module (5.1), um eine Zirkulationskammer (15) eines Wärmeübertragungsfluids zu definieren.

15. Verfahren zur Herstellung eines katalytischen Reformierungs-Austauschreaktors, wobei die folgenden Schritte durchgeführt werden:
- nach Betrieb über eine bestimmte Anzahl von Zyklen, Demontage einer SOFC-Brennstoffzelle, die einen Stapel von elementaren elektrochemischen SOFC-Zellen (C1, C2, C3), jeweils gebildet von einer Anode (2.1, 2.2..), einer Kathode (4.1, 4.2) und einem Elektrolyten (3.1, 3.2), der zwischen der Kathode und der Anode angeordnet ist, einer Mehrzahl von elektrischen und fluidischen Interkonnektoren (5), die jeweils von einem elementaren Modul nach einem der Ansprüche 1 bis 4 gebildet sind, die jeweils zwischen zwei elementaren Zellen angeordnet sind, die dem ersten Endblech (7) in elektrischem Kontakt mit der Anode (2.1) einer der zwei elementaren Zellen (C1) und dem mittleren Blech (8) in elektrischem Kontakt mit der Kathode (4.2) der anderen (C2) der zwei elementaren Zellen benachbart sind, und Dichtungsrahmen, die jeweils zwischen zwei elementaren Modulen angeordnet sind, aufweist,
- Entfernen der elektrochemischen Zellen,
- Herstellen eines neuen Stapels mit:
• Einfügen eines Dichtungsrahmens (10.2) zwischen ein mittleres elementares Modul (5.2) und eins der benachbarten Module (5.3) und entgegengesetztes Umdrehen jedes zweiten elementaren Moduls, damit das erste Endblech eines elementaren Moduls gegenüber dem ersten Endblech eines benachbarten elementaren Moduls liegt,
• Anbringen einer Trägerplatte, die ein festes aber poröses katalytisches Reformierungsmaterial trägt, in Anlage an die nicht durchbrochenen Mittelabschnitte der mittleren Bleche des mittleren elementaren Moduls und des benachbarten Moduls, die durch den Dichtungsrahmen (10.2) getrennt sind, um eine Reformierungskammer (13) zu definieren, Herstellen eines begrenzten Raumes zwischen den zwei durchbrochenen Mittelabschnitten (85) des mittleren elementaren Moduls (5.2) des anderen der benachbarten Module (5.1), um eine Zirkulationskammer (15) eines Wärmeübertragungsfluids zu definieren.

## Claims

1. Elementary module (5.1, 5.2, 5.3) for distributing reaction gases and reaction products for either a high temperature steam electrolysis reactor or a high temperature steam and carbon dioxide co-electrolysis reactor, for an SOFC fuel cell, or for a catalytic reactor-exchanger created by stacking, made up of three flat plates (7, 8, 9) which are elongate along two mutually orthogonal axes of symmetry (X, Y) where:
- one of the end plates (7), referred to as first end plate, and the central plate (8) each comprise a non-pierced central part (75, 85) and are each pierced, at the periphery of their central part, with at least four slots (71 to 74, 81 to 84), the first (71, 81) and second (72, 82) slots of each plate being elongate along a length corresponding to part of the length of the central part along one of the axes X while the third (73, 83) and fourth (74, 84) slots of each plate are elongate along a length corresponding substantially to the length of the central part along the other of the axes Y,
- the first end plate (7) further comprises a fifth slot (76) and a sixth slot (77) which slots are arranged symmetrically on each side of the axis X, inboard of its first to fourth slots (71 to 74), and are elongate over a length corresponding substantially to the length of the central part along the axis X,
- the other of the end plates (9), referred to as second end plate, comprises at the periphery of its central part at least four slots (91 to 94), the first slot (91) and second slot (92) being elongate over a length corresponding to part of the length of the central part along one of the axes X, while the third slot (93) and fourth slot (94) are elongate over a length corresponding substantially to the length of the central part along the other of the axes Y, the central part of the second end plate (9) being further pierced with a fifth slot (95),
- the other of the end plates (9) further comprises a sixth slot (96) and a seventh slot (97) which are arranged symmetrically on each side of the axis Y, inboard of its first to fourth slots (91 to 94) and are elongate over a length corresponding substantially to the length of the central part along the other of the axes Y, wherein:
- the first to fourth slots (81 to 84) of the central plate (8) are enlarged with respect to the first to fourth slots (71 to 74, 91 to 94) respectively of each end plate,
- all the enlarged slots (81 to 84) of the central plate comprise in their enlarged part fingers of plate (810, 820, 830, 840) which are spaced apart from one another to form a comb defining comb gaps,
and wherein the three plates are layered and assembled with one another such that:
- the fingers of plate (810, 820, 830, 840) form spacers maintaining a spacing between first and second end plates,
- each of the first to fourth slots of one of the three plates is in fluidic communication individually with one of the corresponding first to fourth slots of the other two plates respectively,
- the first slot (71) of the first end plate (7) is in fluidic communication with the fifth slot (76) of the first end plate via the comb gaps of the first enlarged slot (81) of the central plate,
- the second slot (72) of the first end plate (7) is in fluidic communication with the sixth slot (77) of the first end plate via the comb gaps of the second enlarged slot (82) of the central plate,
- the third slot (93) of the second end plate (9) is in fluidic communication with the fifth slot (95) of the second end plate via the comb gaps of the third enlarged slot (83) of the central plate and via the sixth slot (96) of the second end plate (9),
- the fourth slot (94) of the second end plate (9) is in fluidic communication with the fifth slot (95) of the second end plate via the comb gaps of the fourth enlarged slot (84) of the central plate and via the seventh slot (97) of the second end plate (9).

2. Elementary module according to Claim 1, the three plates (7, 8, 9) being assembled with one another by welding or by brazing.

3. Elementary module according to either of the preceding claims, the three plates (7, 8, 9) being made of ferritic steel containing approximately 20% chrome.

4. Elementary module according to one of the preceding claims, each of the three plates (7, 8, 9) having a thickness of between 0.1 and 1 mm.

5. Catalytic reactor-exchanger (14) comprising a stack of the following elements:
- at least three elementary modules (5.1, 5.2, 5.3) according to one of the preceding claims,
- at least one sealing frame (10.2) elongate along two mutually orthogonal axes of symmetry, each frame being pierced at the periphery of its central part with at least four slots (101 to 104), the first slot (101) and second slot (102) of each frame being elongate over a length corresponding to part of the length of the central part along one of the axes, while the third slot (103) and fourth slot (104) of each frame are elongate over a length corresponding substantially to the length of the central part along the other of the axes, each frame comprising a central part pierced with a fifth slot (105),
- a support sheet (13), supporting a solid but porous catalytic material,
the stack being such that:
- the central module (5.2) is arranged top to tail with respect to the two end modules (5.1, 5.3) so that the first end plate (7) of the central module (5.2) faces the first end plate (7) of one of the end modules (5.3) and so that the second end plate (9) of the central module (5.2) faces the second endplate (9) of the other of the end modules (5.1),
- a sealing frame (10.2) is interposed between the central module (5.2) and one of the end modules (5.3) and is in contact with one of the two end plates thereof,
- the support sheet (13) is arranged inside the sealing frame (10.2) and bears against the non-pierced central parts (75) of the first end plate (7) of the central module (5.2) and of one of the end modules (5.3) and defines a catalytic reaction chamber (13),
- the space delimited between the two pierced central parts (95) of the central module (5.2) of the other of the end modules (5.1) defines a circulation chamber (15) for a heat transport fluid,
the reactor preferably comprising at least two sealing frames (10.1. 10.2), the stack being such that:
- the other sealing frame (10.1) is interposed between the central module (5.2) and the other of the end modules (5.1) and in contact with one of the two end plates thereof,
- the circulation chamber (15) for circulation of the heat transport fluid is delimited by the other sealing frame (10.1).

6. Catalytic reactor-exchanger (14) according to Claim 6, constituting a methanation reactor-exchanger or a reforming reactor-exchanger.

7. Method of operation of a methanation reactor-exchanger according to Claim 6, whereby a mixture of hydrogen and of carbon monoxide or carbon dioxide is supplied and distributed by injecting it into the first slots (71, 81, 91, 101), the methane produced is recovered from the second slots (72, 82, 92, 102) and at the same time a cooling heat transport fluid is supplied to the third slots (73, 83, 93, 103) and recovered from the fourth slots (74, 84, 94, 104).

8. Method of operation of a reforming reactor-exchanger according to Claim 6, whereby a mixture of methane and of steam is supplied and distributed by injecting it into the first slots (71, 81, 91, 101), the produced syngas containing carbon monoxide (CO) and hydrogen (H₂) is recovered from the second slots (72, 82, 92, 102) and at the same time a heating heat transport fluid is supplied to the third slots (73, 83, 93, 103) and recovered from the fourth slots (74, 84, 94, 104).

9. High temperature steam electrolysis reactor or high-temperature steam and carbon dioxide co-electrolysis reactor comprising a stack of elementary electrolysis cells (C1, C2, C3) of SOEC type each formed of a cathode (2.1, 2.2), of an anode (4.1, 4.2) and of an electrolyte (3.1, 3.2) interposed between the cathode and the anode, of a plurality of electrical and fluidic interconnectors (5) each consisting of an elementary module according to one of Claims 1 to 4 each arranged between two adjacent elementary cells with the first end plate (7) in electrical contact with the cathode (2.1) of one of the two elementary cells (C1) and the central plate (8) in electrical contact with the anode (4.2) of the other (C2) of the two elementary cells, and of sealing frames each arranged between two elementary modules and being in contact with one of the two end plates thereof.

10. Set of reactors comprising:
- at least one electrolysis or co-electrolysis reactor according to Claim 9,
- at least one catalytic methanation reactor-exchanger according to Claim 13, connected downstream of the electrolysis or co-electrolysis reactor.

11. Set of reactors according to Claim 10, comprising at least one fluid-tight vessel able to be placed under a given pressure, typically of between 1 and 100 bar, and in which at least the methanation reactor-exchanger and/or the electrolysis/co-electrolysis reactor is/are housed.

12. SOFC fuel cell comprising a stack of elementary electrochemical cells (C1, C2, C3) of SOFC type each formed of an anode (2.1, 2.2), of a cathode (4.1, 4.2) and of an electrolyte (3.1, 3.2) interposed between the cathode and the anode, of a plurality of electrical and fluidic interconnectors (5) each consisting of an elementary module according to one of Claims 1 to 4 each arranged between two adjacent elementary cells with the first end plate (7) in electrical contact with the anode (2.1) of one of the two elementary cells (C1) and the central plate (8) in electrical contact with the cathode (4.2) of the other (C2) of the two elementary cells, and of sealing frames each arranged between two elementary modules.

13. Set of reactors comprising:
- at least one SOFC fuel cell according to Claim 12,
- at least one catalytic reforming reactor-exchanger according to Claim 13, connected upstream of the SOFC fuel cell;
- preferably at least one fluid-tight vessel able to be placed under a given pressure and in which either only the SOFC fuel cell or both the reforming reactor-exchanger and the SOFC fuel cell is/are housed.

14. Method for producing a catalytic methanation reactor-exchanger whereby the following steps are performed:
- after running for a given number of cycles, dismantling of either a high temperature steam electrolysis reactor or a high-temperature steam and carbon dioxide co-electrolysis reactor, comprising a stack of elementary electrolysis cells (C1, C2, C3) of SOEC type each formed of a cathode (2.1, 2.2), of an anode (4.1, 4.2) and of an electrolyte (3.1, 3.2) interposed between the cathode and the anode, and a plurality of electrical and fluidic interconnectors (5) each consisting of an elementary module according to one of Claims 1 to 4 each arranged between two adjacent elementary cells with the first end plate (7) in electrical contact with the anode (2.1) of one of the two elementary cells (C1) and the central plate (8) in electrical contact with the cathode (4.2) of the other (C2) of the two elementary cells, and of sealing frames each arranged between two elementary modules and being in contact with one of the two end plates thereof,
- removal of the electrolysis cells,
- creation of a new stack with:
• interposition of a sealing frame (10.2) between a central elementary module (5.2) and one of the adjacent modules (5.3) and inversion, top to tail, of every second elementary module so as to have the first end plate of one elementary module facing the first end plate of an adjacent elementary module,
• introduction of a support sheet supporting a solid but porous methanation catalytic material pressing against the non-pierced central parts of the central plates of the central elementary module and of the adjacent module which are separated by the sealing frame (10.2) so as to define a methanation chamber (13),
• creation of a space delimited between the two pierced central parts (85) of the central elementary module (5.2) of the other of the adjacent modules (5.1) so as to define a circulation chamber (15) for the circulation of a heat transport fluid.

15. Method for producing a catalytic reforming reactor-exchanger whereby the following steps are performed:
- after running for a given number of cycles, dismantling of an SOFC fuel cell comprising a stack of elementary electrochemical cells (C1, C2, C3) of SOFC type each formed of an anode (2.1, 2.2), of a cathode (4.1, 4.2) and of an electrolyte (3.1, 3.2) interposed between the cathode and the anode, of a plurality of electrical and fluidic interconnectors (5) each consisting of an elementary module according to one of Claims 1 to 4, each arranged between two adjacent elementary cells with the first end plate (7) in electrical contact with the anode (2.1) of one of the two elementary cells (C1) and the central plate (8) in electrical contact with the cathode (4.2) of the other (C2) of the two elementary cells, and of sealing frames each arranged between two elementary modules,
- removal of the electrochemical cells,
- creation of a new stack with:
• interposition of a sealing frame (10.2) between a central elementary module (5.2) and one of the adjacent modules (5.3) and inversion, top to tail, of every second elementary module so as to have the first end plate of one elementary module facing the first end plate of an adjacent elementary module,
• introduction of a support sheet supporting a solid but porous reforming catalytic material pressing against the non-pierced central parts of the central plates of the central elementary module and of the adjacent module which are separated by the sealing frame (10.2) so as to define a reforming chamber (13), creation of a space delimited between the two pierced central parts (85) of the central elementary module (5.2) of the other of the adjacent modules (5.1) so as to define a circulation chamber (15) for the circulation of a heat transport fluid.
